(19) Europäisches Patentamt / European Patent Office / Office européen des brevets

(11) EP 4 442 718 A1

(12) **EUROPEAN PATENT APPLICATION**
published in accordance with Art. 153(4) EPC

(43) Date of publication:
**09.10.2024 Bulletin 2024/41**

(21) Application number: **22901446.9**

(22) Date of filing: **02.12.2022**

(51) International Patent Classification (IPC):
***C08F 220/06*** *(2006.01)* ***C08F 2/00*** *(2006.01)*
***C08F 4/04*** *(2006.01)* ***C08F 220/20*** *(2006.01)*
***C08F 220/38*** *(2006.01)* ***C08F 220/58*** *(2006.01)*
***C08F 230/02*** *(2006.01)* ***C08F 236/20*** *(2006.01)*

(52) Cooperative Patent Classification (CPC):
**C08F 2/00; C08F 4/04; C08F 220/00; C08F 220/06; C08F 220/12; C08F 220/20; C08F 220/38; C08F 220/54; C08F 220/56; C08F 220/58; C08F 230/02; C08F 236/20**

(86) International application number:
**PCT/JP2022/044595**

(87) International publication number:
**WO 2023/101016 (08.06.2023 Gazette 2023/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **03.12.2021 JP 2021196875**
**03.12.2021 JP 2021196860**

(71) Applicants:
- **KIRIN HOLDINGS KABUSHIKI KAISHA**
  **Nakano-ku, Tokyo 164-0001 (JP)**
- **The University of Tokyo**
  **Bunkyo-ku, Tokyo 113-8654 (JP)**

(72) Inventors:
- **TAKAI Madoka**
  **Tokyo 113-8654 (JP)**
- **MASUDA Tsukuru**
  **Tokyo 113-8654 (JP)**
- **SAEGUSA Yui**
  **Tokyo 113-8654 (JP)**
- **TSUJI Toshikazu**
  **Tokyo 164-0001 (JP)**

(74) Representative: **ABG Intellectual Property Law, S.L.**
**Avenida de Burgos, 16D**
**Edificio Euromor**
**28036 Madrid (ES)**

# (54) HIGH-STRENGTH HIGH-VISCOSITY POLYMER GEL USING IMIDAZOLIUM-BASED CATIONIC POLYMERIZATION INITIATOR

(57) There is disclosed a polymer gel including a structure derived from a main monomer M1, a crosslinking agent monomer M2, and a radical polymerization initiator I as a constituent element. In this polymer gel, a monomer reactivity ratio $r_1$ of the main monomer M1 and the monomer reactivity ratio $r_2$ of the crosslinking agent monomer M2 satisfy a condition of $r_1 > r_2$, a molar ratio of an addition amount of the crosslinking agent monomer M2 to an addition amount of the main monomer M1 is 12% or less, an addition molar ratio $C_M$ of the crosslinking agent monomer M2 to an addition amount of the main monomer M1, and an addition molar ratio $I_M$ of the initiator to an addition amount of the main monomer M1 satisfy a condition of $I_M \leq 0.66C_M + 0.0017$, and the radical polymerization initiator I is a compound having a chemical structure of a general formula (I). This polymer gel has properties of high strength and high viscosity.

EP 4 442 718 A1

[Fig. 1]

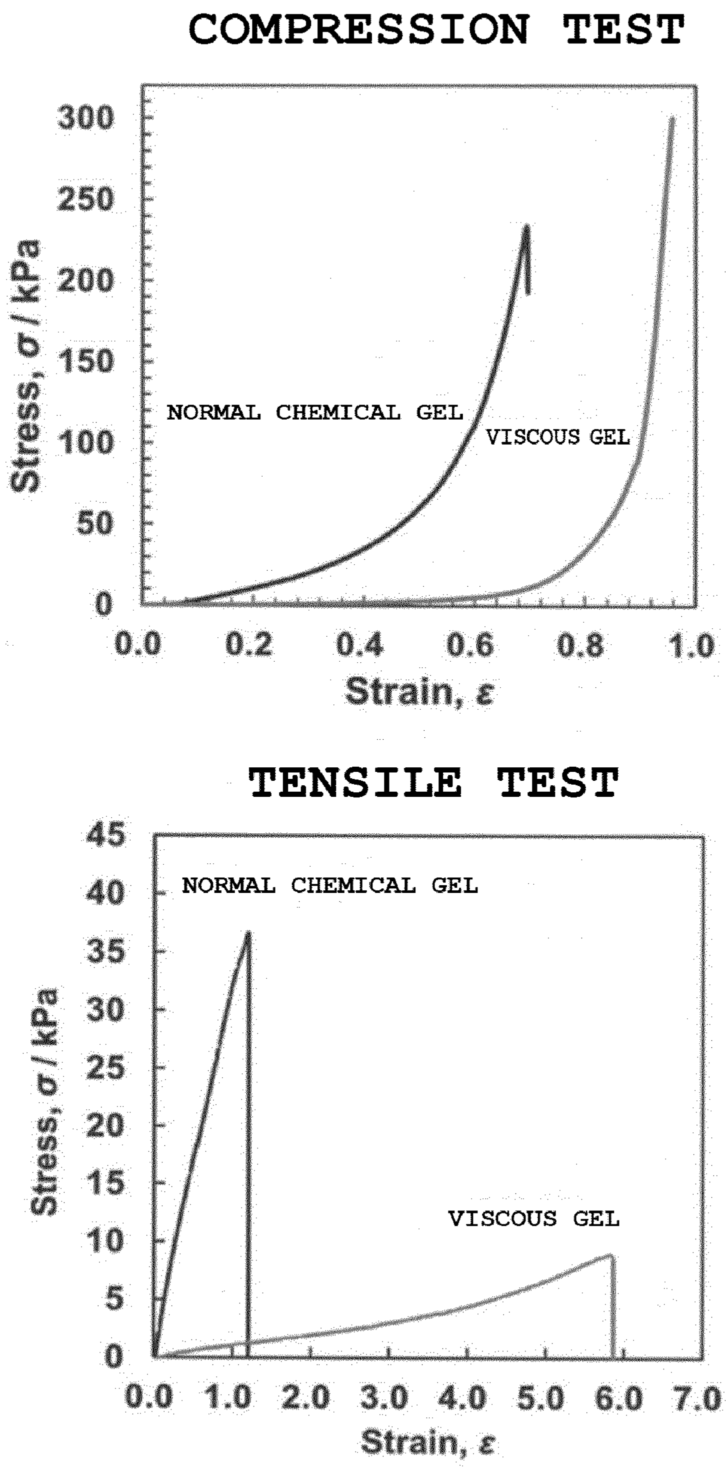
COMPRESSION TEST
Stress, σ / kPa
300
250
200
150
100
50
0
NORMAL CHEMICAL GEL
VISCOUS GEL
0.0
0.2
0.4
0.6
0.8
1.0
Strain, ε
TENSILE TEST
Stress, σ / kPa
45
40
35
30
25
20
15
10
5
0
NORMAL CHEMICAL GEL
VISCOUS GEL
0.0
1.0
2.0
3.0
4.0
5.0
6.0
7.0
Strain, ε

## Description

[Reference to Related Applications]

The present patent application involves a claim of priority based on Japanese Patent Application No. 2021-196875 (filing date: December 3, 2021) or Japanese Patent Application No. 2021-196860 (filing date: December 3, 2021), which is a patent application filed earlier in Japan. The entire disclosure in this earlier patent application is incorporated herein by reference.

[Background of Invention]

Technical Field

The present invention relates to a polymer gel with high strength and high viscosity.

Background Art

Radical copolymerization of vinyl monomers and chemical crosslinking agents is commonly used as a method for obtaining polymer hydrogels. Among polymer hydrogels, those with high strength can be obtained by, for example, specific chemical species or specific production methods in some cases (Patent Literature 1). However, in general, polymer hydrogels (particularly, chemically crosslinked polymer hydrogels) have a characteristic of often having low viscosity despite having high strength. Low viscosity of polymer hydrogels may cause problems such as being brittle, lacking in flexibility, or having poor impact and vibration absorption properties depending on usage scenes.

Many studies have been performed on high-strength polymer gels. For example, it has been reported that a high-strength hydrogel containing anion-modified cellulose nanofibers and a method for producing the same are provided (Patent Literature 1). However, the prior art according to Patent Literature 1 is limited to a specific chemical species of anion-modified cellulose nanofibers, the production thereof requires high-temperature and high-pressure treatment, the viscosity thereof is low, and the breaking strength of the hydrogel remains at 2.0 to 8.0 kPa.

There has also been reported a hydrogel composed of a polymer matrix and the like containing a multivalent ion-containing compound and a copolymer of a monofunctional monomer having one ethylenically unsaturated group and a polyfunctional monomer having two to six ethylenically unsaturated groups, the hydrogel having a tensile breaking strength of 30 kPa or more and a tensile breaking elongation of 200% or more (Patent Literature 2). However, in the prior art according to Patent Literature 2, the polymer matrix is limited to a specific material, the viscosity thereof is low, a multivalent ion-containing compound is necessary for the gel composition, and the application of the hydrogel may be limited.

[Citation List]

[Patent Literature]

[Patent Literature 1] Japanese Unexamined Patent Application Publication No. 2018-199753
[Patent Literature 2] Japanese Unexamined Patent Application Publication No. 2017-171825

[Summary of Invention]

The present inventors have performed intensive studies to provide a polymer gel with high strength and high viscosity and as a result found that the use of a combination of a main monomer and a crosslinking agent monomer with predetermined properties, the adjustment of the usage ratio of the crosslinking agent monomer to the main monomer, and the use of a polymerization initiator with a predetermined structure can provide a polymer gel with high strength and high viscosity.

Thus, the present invention provides a novel polymer gel with high strength and high viscosity.

The present invention includes the following inventions.

(1) A polymer gel including

a structure derived from a main monomer M1, a crosslinking agent monomer M2, and a radical polymerization

initiator I as a constituent element, wherein

a monomer reactivity ratio $r_1$ of the main monomer M1 and a monomer reactivity ratio $r_2$ of the crosslinking agent monomer M2 satisfy a condition of $r_1 > r_2$,

a molar ratio of an addition amount of the crosslinking agent monomer M2 to an addition amount of the main monomer M1 is 12% or less,

an addition molar ratio $C_M$ of the crosslinking agent monomer M2 to an addition amount of the main monomer M1 and an addition molar ratio $I_M$ of the radical polymerization initiator I to an addition amount of the main monomer M1 satisfy a condition of $I_M \leq 0.66C_M + 0.0017$, and

the radical polymerization initiator I is a compound having a chemical structure of a general formula (I):

[Chem. 1]

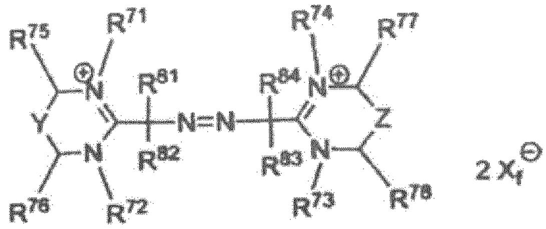

(I)

wherein Y represents a single bond or $CR^{85}$,

Z represents a single bond or $CR^{86}$,

$R^{72}$, $R^{73}$ , $R^{75}$, $R^{76}$, $R^{77}$, $R^{78}$, $R^{85}$, and $R^{86}$ are each independently selected from the group consisting of a hydrogen atom, $C_{1-6}$ alkyl, $C_{1-6}$ alkoxy, $C_{1-6}$ alkylcarbonyl, phenyl, and hydroxy, wherein the $C_{1-6}$ alkyl, $C_{1-6}$ alkoxy, $C_{1-6}$ alkylcarbonyl, and phenyl may further be substituted with one or two substituents selected from the group consisting of $C_{1-6}$ alkyl, $C_{1-6}$ alkoxy, $C_{1-6}$ alkylcarbonyl, phenyl, and hydroxy,

$R^{72}$ and $R^{73}$ may further each independently represent adamantyl or $C_{1-6}$ alkyl substituted with $Si(OCH_3)_2(CH_3)$, alternatively, $R^{75}$ and $R^{76}$, or $R^{77}$ and $R^{78}$ may be combined together to form $-(CH_2)_{3-5}-$,

$R^{81}$, $R^{82}$, $R^{83}$, and $R^{84}$ are substituents selected from the group consisting of $C_{1-4}$ alkyl, $C_{1-4}$ alkylcarbonyl, and $C_{1-3}$ alkoxy, wherein the $C_{1-4}$ alkyl may be substituted with one $C_{1-3}$ alkoxy group,

$R^{71}$ and $R^{74}$ are each independently a $C_{1-3}$ alkyl group, and

$X_f^-$ is a counter anion.

(2) The polymer gel according to (1), wherein the monomer reactivity ratio $r_1$ of the main monomer M1 and the monomer reactivity ratio $r_2$ of the crosslinking agent monomer M2 further satisfy conditions of $r_1 > 1$ and $r_2 < 1$.
(3) The polymer gel according to (1) or (2), wherein at 25°C, a maximum value of tan $\delta$ at an angular frequency $\omega$ ($rad \cdot s^{-1}$) of 0.1 to 10 is 0.1 or more, and a maximum value of a storage modulus G' when the angular frequency $\omega$ ($rad \cdot s^{-1}$) is changed from 0.1 to 10 is more than or equal to twice a minimum value.
(4) The polymer gel according to any one of (1) to (3), wherein a strain ($\varepsilon$) at a breaking point in a compression test is 0.8 or more at 25°C.
(5) The polymer gel according to any one of (1) to (4), wherein a strain ($\varepsilon$) at a breaking point in a tensile test is 2 or more at 25°C.
(6) The polymer gel according to any one of (1) to (5), wherein at 25°C, an elastic modulus (G) is 2300 Pa or less, and a strain ($\varepsilon$) at a breaking point is 1 or more in a tensile test.
(7) The polymer gel according to any one of (1) to (6), wherein a water content at 25°C is 4% or more and 98% or less.
(8) The polymer gel according to any one of (1) to (7), wherein $r_1 > 3$ and $r_2 < 0.7$.
(9) The polymer gel according to any one of (1) to (8), wherein a product of $r_1$ and $r_2$, $r_1 \cdot r_2$, is 2 or more.
(10) The polymer gel according to any one of (1) to (9), wherein a combination of the main monomer M1 and the crosslinking agent monomer M2 is a combination of methacrylamide and acrylamide, or a combination of methacrylate and acrylamide.
(11) The polymer gel according to any one of (1) to (10), wherein

the main monomer M1 is a monomer selected from the group consisting of MPC (2-methacryloyloxyethyl phosphorylcholine), mOEGMA (oligoethylene glycol methacrylate), SPM (potassium 3-(methacryloyloxy)propanesulfonate), and MDBS (4-[(3-methacrylamidopropyl)dimethylammonio]butane-1-sulfonate), and
the crosslinker monomer M2 is MBAAm (N,N'-methylenebisacrylamide).

(12) The polymer gel according to any one of (1) to (11), wherein a decomposition rate ($10^{-7}$/s) at 25°C of the radical polymerization initiator I is 25 or more.
(13) The polymer gel according to any one of (1) to (12), wherein the radical polymerization initiator I is ADIP (2,2'-azobis-(2-(1,3-dimethyl-4,5-dihydro-1H-imidazol-3-ium-2-yl))propane triflate).
(14) The polymer gel according to any one of (1) to (13), which has an adhesion property.
(15) The polymer gel according to any one of (1) to (14), wherein the main monomer M1 is methacrylate.
(16) A method for producing the polymer gel according to any one of (1) to (15), including

a step of performing a polymerization reaction with the main monomer M1, the crosslinking agent monomer M2, and the radical polymerization initiator I, wherein
a molar ratio of an addition amount of the crosslinking agent monomer M2 to an addition amount of the main monomer M1 is 12% or less, and
an addition molar ratio $C_M$ of the crosslinking agent monomer M2 to an addition amount of the main monomer M1 and an addition molar ratio $I_M$ of the polymerization initiator I to an addition amount of the main monomer M1 satisfy a condition of $I_M \leq 0.66C_M + 0.0017$.

(17) The method according to (16), wherein the polymerization reaction is performed at a temperature of 35°C or less.
(18) A polymer gel including

a structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of a content of the crosslinking agent monomer M2 to a content of the main monomer M1 is 12% or less,
a content molar ratio $C_M$ of the crosslinking agent monomer M2 to a content of the main monomer M1 and a content molar ratio $I_M$ of the radical polymerization initiator I to a content of the main monomer M1 satisfy a condition of $I_M \leq 0.66C_M + 0.0017$, and
the radical polymerization initiator I is a compound having a chemical structure of a general formula (I):

[Chem. 2]

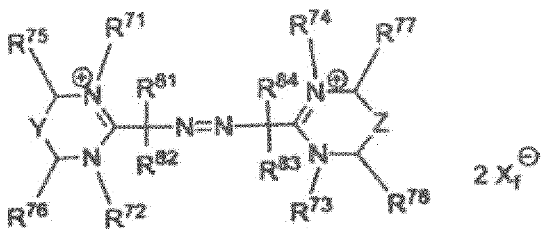

(I)

wherein Y represents a single bond or $CR^{85}$,
Z represents a single bond or $CR^{86}$,
$R^{72}$, $R^{73}$ , $R^{75}$, $R^{76}$, $R^{77}$, $R^{78}$, $R^{85}$, and $R^{86}$ are each independently selected from the group consisting of a hydrogen atom, $C_{1-6}$ alkyl, $C_{1-6}$ alkoxy, $C_{1-6}$ alkylcarbonyl, phenyl, and hydroxy, wherein the $C_{1-6}$ alkyl, $C_{1-6}$ alkoxy, $C_{1-6}$ alkylcarbonyl, and phenyl may further be substituted with one or two substituents selected from the group consisting of $C_{1-6}$ alkyl, $C_{1-6}$ alkoxy, $C_{1-6}$ alkylcarbonyl, phenyl, and hydroxy,
$R^{72}$ and $R^{73}$ may further each independently represent adamantyl or $C_{1-6}$ alkyl substituted with $Si(OCH_3)_2(CH_3)$,
alternatively, $R^{75}$ and $R^{76}$, or $R^{77}$ and $R^{78}$ may be combined together to form $-(CH_2)_{3-5}-$,

$R^{81}$, $R^{82}$, $R^{83}$, and $R^{84}$ are substituents selected from the group consisting of $C_{1-4}$ alkyl, $C_{1-4}$ alkylcarbonyl, and $C_{1-3}$ alkoxy, wherein the $C_{1-4}$ alkyl may be substituted with one $C_{1-3}$ alkoxy group,
$R^{71}$ and $R^{74}$ are each independently a $C_{1-3}$ alkyl group, and
$X_f^-$ is a counter anion.

The present invention provides a polymer gel with high strength and high viscosity. Further, within the scope of the present invention, it is possible to obtain a high-toughness polymer gel with high strength and high viscosity, and a polymer gel having adhesion properties with high strength and high viscosity.

[Brief Description of Drawings]

[Fig. 1] Fig. 1 is graphs showing the results of a compression test and a tensile test of a polymer gel prepared using ADIP as a polymerization initiator.
[Fig. 1-2] Fig. 1-2 is graphs showing the results of the dynamic viscoelasticity of various polymer gels prepared using ADIP or APS/TEMED as a polymerization initiator.
[Fig. 1-3] Fig. 1-3 is graphs showing the results of the dynamic viscoelasticity of various polymer gels prepared using ADIP or APS/TEMED as a polymerization initiator.
[Fig. 1-4] Fig. 1-4 is graphs showing the results of the dynamic viscoelasticity of various polymer gels prepared using ADIP or APS/TEMED as a polymerization initiator.
[Fig. 1-5] Fig. 1-5 is graphs showing the results of the dynamic viscoelasticity of various polymer gels prepared using ADIP or APS/TEMED as a polymerization initiator.
[Fig. 2] Fig. 2 is a graph showing an Arrhenius plot of the decomposition rate of ADIP in water.
[Fig. 3] Fig. 3 is a graph showing the polymerization behavior of acrylamide/methacrylate when each polymerization initiator is used.
[Fig. 4] Fig. 4 is graphs showing the results of evaluating the reactivity of each monomer in copolymerization.
[Fig. 4-2] Fig. 4-2 is a graph showing the results of the dynamic viscoelasticity of PMPC polymer gels prepared with each polymerization initiator.
[Fig. 5] Fig. 5 is a diagram showing the physical properties of polymers obtained by polymerization reactions at various polymerization initiator/monomer ratios and various crosslinking agent/monomer ratios when ADIP is used as a polymerization initiator.
[Fig. 5-2] Fig. 5-2 is graphs showing changes in dynamic viscoelasticity depending on the molar ratio of a crosslinking agent MBAMm of a PMPC polymer gel prepared using APS/TEMED as a polymerization initiator.
[Fig. 6] Fig. 6 is a graph showing the results of a compression test of a polymer gel prepared using APS/TEMED as a polymerization initiator.
[Fig. 7] Fig. 7 shows the results of $^1$H-NMR measurement of a mixture of MPC and MBAMm before the start of the polymerization reaction.
[Fig. 8] Fig. 8 shows the results of $^1$H-NMR measurement of the mixture of MPC and MBAMm two hours after the start of the polymerization reaction.
[Fig. 9] Fig. 9 is graphs showing the evaluation results of the amount consumed before and after the start of the polymerization reaction for each combination of the main monomer and the crosslinking agent monomer.
[Fig. 10] Fig. 10 is a graph showing the results of a tensile test of three types of polymer gels prepared with each combination of the main monomer, the crosslinking agent monomer, and the polymerization initiator.
[Fig. 11] Fig. 11 is a graph showing the results of a tensile test of three types of polymer gels prepared by changing the concentration of MBAAm in combinations of the main monomer (MPC), the crosslinking agent monomer (MBAAm), and the polymerization initiator (ADIP).
[Fig. 12] Fig. 12 is a graph showing the results of plotting the elastic modulus and the breaking strain obtained from Figs. 10 and 11 for each gel and evaluating the correlation with synthesis conditions.
[Fig. 13] Fig. 13 is a graph showing the result of superimposing and plotting the elastic modulus and the breaking strain of the gel described in known literature on Fig. 12.
[Fig. 14] Fig. 14 is graphs showing the relationship between the water content of a gel and the adhesion force of the gel to glass.
[Fig. 15] Fig. 15 is a graph showing the adhesion property of the gel subjected to condensation after drying to glass.

[Detailed Description of Invention]

In the present invention, monomer reactivity ratios "$r_1$" and "$r_2$" are defined as follows when $M_1$ is a main

monomer and $M_2$ is a crosslinking agent monomer: $r_1 = k_{11}/k_{12}$, $r_2 = k_{22}/k_{21}$. Further, the definitions of $k_{11}$, $k_{12}$, $k_{22}$, and $k_{21}$ are as follows. In the growth process of a copolymerization reaction, when a growing species (that is, a monomer at the reactive end of a growing polymer) is $M_1^*$ or $M_2^*$, each growing species can be reacted with $M_1$ or $M_2$. Specifically, the rate constant of the process in which $M_1^*$ reacts with $M_1$ to generate $M_1^*$ is set to $k_{11}$, the rate constant of the process in which $M_1^*$ reacts with $M_2$ to generate $M_2^*$ is set to $k_{12}$, the rate constant of the process in which $M_2^*$ reacts with $M_1$ to generate $M_1^*$ is set to $k_{21}$, and the rate constant of the process in which $M_2^*$ reacts with $M_2$ to generate $M_2^*$ is set to $k_{22}$.

There are various methods for measuring the monomer reactivity ratios $r_1$ and $r_2$ (or $k_{11}$, $k_{12}$, $k_{22}$, and $k_{21}$). Experimentally, several polymerizations are performed with various monomer ratios, and $r_1$ and $r_2$ can be determined by relating the composition of a copolymer generated at the beginning of the polymerization to the charged monomer composition. The composition of the copolymer can be determined by $^1$H-NMR or FT-IR. When the charged monomer ratio is set to $F = [M_1]/[M_2]$ and the ratio in a polymer is set to $f = d[M_1]/d[M_2]$, the following formula 1 is established by using the monomer reactivity ratio.

[Math. 1]

$$\frac{F}{f}(f-1) = \frac{F^2}{f}r_1 - r_2 \qquad \text{(Formula 1)}$$

Calculating $F^2/f$ and $(F/f)(f-1)$ and plotting them on rectangular coordinates can provide $r_1$ and $r_2$ from the slope and the intercept (Fineman-Ross method).

Further, to determine the monomer reactivity ratio, it is more desirable to use the Kelen-Tudos method, which is modified as shown in the following formula 2, in order to perform a more reliable analysis.

[Math. 2]

$$\eta = (r_1 + \frac{r_2}{a})\xi - \frac{r_2}{a} \qquad \text{(Formula 2)}$$

wherein a is a constant, and a geometric mean between the maximum value and the minimum value of $F^2/f$; in addition,

$\eta = \frac{F(1-1/f)}{a+F^2/f}$, and $\xi = \frac{F^2/f}{a+F^2/f}$.

Plotting ξ against η on rectangular coordinates can provide $r_1$ and $r_2$ from the slope and the intercept.

In the present invention, the "decomposition rate constant" ($10^{-7}$ $s^{-1}$) is defined as the rate of reaction in which a polymerization initiator radical I* is generated from a polymerization initiator I. For example, in a case of an azo-based radical polymerization initiator, the decomposition rate constant is the rate constant in a reaction in which two molecules of the polymerization initiator radical I* are generated from one molecule of the polymerization initiator I, and the same can be considered in a case of persulfate, which is a redox-based polymerization initiator. In addition, it has been shown that two initiator radicals are generated even when persulfate and tetramethylenediamine (TEMED) are used (Feng XD, Guo XQ, Qiu KY., Makromol. Chem. 1988, 189, 77-83).

The decomposition rate is measured by various methods, and for example, can be specifically measured by the following method. In the case of the azo-based radical polymerization initiator, the concentration of the polymerization initiator can be detected by measuring the absorbance derived from an azo group, and thus, the decomposition rate can be determined by determining the rate of change in the polymerization initiator concentration at the reaction temperature. Alternatively, a decomposition rate $k_d$ is represented by the following Arrhenius equation (Formula 3), and thus may be calculated using values reported in literature. In Formula 3, A is a frequency factor, E ($kJ \cdot mol^{-1} \cdot K^{-1}$) is activation energy, and R is a gas constant.

[Math. 3]

$$k_d = A \cdot \exp\left(-\frac{E}{RT}\right) \qquad \text{(Formula 3)}$$

In the present invention, a storage modulus "G'" (dynamic storage modulus G') can be measured using, for example, a dynamic viscoelasticity measuring apparatus. For example, G' can be measured by the method described in Examples.

A loss modulus "G"" can be measured using a dynamic viscoelasticity measuring apparatus. For example, G" can be measured by the method described in Examples.

In the present invention, a loss tangent "tan δ" means loss modulus G"/storage modulus G'.

In the present invention, a "strain (ε)" in a compression test means a strain value determined by the compression test described in Examples.

In the present invention, a "strain (ε)" in a tensile test means a strain value determined by the tensile test described in Examples.

In the present invention, the "adhesion force" means adhesion force ($N/m^2$ = Pa) measured according to the method described in Examples, and when this value is 200 or more, it is determined that the adhesion force is sufficient.

A polymer gel of the present invention is a polymer gel including a structure derived from the main monomer M1, the crosslinking agent monomer M2, and the radical polymerization initiator I as a constituent element. The polymer gel of the present invention can be produced by performing a polymerization reaction using the main monomer M1, the crosslinking agent monomer M2, and the radical polymerization initiator I. In this polymerization reaction, the molar ratio of the addition amount of the crosslinking agent monomer M2 to the addition amount of the main monomer M1 is 12% or less, preferably 0.1 to 12%, more preferably 1 to 10%, and still more preferably 2 to 5%. In addition, in this polymerization reaction, the addition molar ratio $C_M$ of the crosslinking agent monomer M2 to the addition amount of the main monomer M1, and the addition molar ratio $I_M$ of the radical polymerization initiator I to the addition amount of the main monomer M1 satisfy the condition of $I_M \leq 0.66C_M + 0.0017$. According to a preferred embodiment of the present invention, this polymerization reaction is performed at a temperature of 35°C or less (for example, around 25°C).

In the present invention, the main monomer M1 and the crosslinking agent monomer M2 are selected such that the monomer reactivity ratio $r_1$ of the main monomer M1 and the monomer reactivity ratio $r_2$ of the crosslinking agent monomer M2 satisfy the condition of $r_1 > r_2$. According to a preferred embodiment of the present invention, the main monomer M1 and the crosslinking agent monomer M2 are selected such that the monomer reactivity ratio $r_1$ of the main monomer M1 and the monomer reactivity ratio $r_2$ of the crosslinking agent monomer M2 satisfy the conditions of $r_1 > 1$ and $r_2 < 1$. According to another preferred embodiment of the present invention, the main monomer M1 and the crosslinking agent monomer M2 are selected so as to satisfy the conditions of $r_1 > 3$ and $r_2 < 0.7$. In addition, according to another preferred embodiment of the present invention, the main monomer M1 and the crosslinking agent monomer M2 are selected such that the product of $r_1$ and $r_2$, $r_1 \cdot r_2$, is 2 or more. The reason for these is considered to be that it is possible to reduce the number of chemical crosslinking points due to a covalent bond, increase the distance between chemical crosslinking points, and increase physical crosslinking points due to a non-covalent bond (the entanglement of polymer chains, the interaction between functional groups (van der Waals forces, a hydrogen bond, an electrostatic interaction, a hydrophobic interaction, and the like), and the like) by setting $r_1$ and $r_2$ within a specific range.

According to a preferred embodiment of the present invention, the combination of the main monomer M1 and the crosslinking agent monomer M2 is a combination of methacrylamide and acrylamide, or a combination of methacrylate and acrylamide. According to a further preferred embodiment of the present invention, the main monomer M1 is a monomer selected from the group consisting of MPC (2-methacryloyloxyethyl phosphorylcholine), mOEGMA (oligoethylene glycol methacrylate), SPM (potassium 3-(methacryloyloxy)propanesulfonate), and MDBS (4-[(3-methacrylamidopropyl)dimethylammonio]butane-1-sulfonate), and the crosslinking agent monomer M2 has two or more vinyl groups in a molecule, and is more preferably MBAAm (N,N'-methylenebisacrylamide). According to another further preferred embodiment of the present invention, the main monomer M1 is methacrylate and methacrylamide.

According to a preferred embodiment of the present invention, for the amount of the main monomer M1 used in the polymerization reaction, for example, the lower limit value can be 0.3 M or more, 0.5 M or more, or 1.5 M or more, and the upper limit value can be 3.0 M or less, 2.5 M or less, or 1.5 M or less. Among them, the amount of the main monomer M1 used in the polymerization reaction is preferably 0.3 to 3.0 M, more preferably 0.5 to 2.5 M, and still more preferably approximately 1.5 M.

In the present invention, the radical polymerization initiator I is a compound having a chemical structure of a general formula (I):

[Chem. 3]

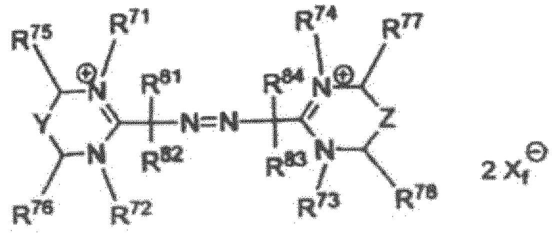

(I)

wherein Y represents a single bond or $CR^{85}$,
Z represents a single bond or $CR^{86}$,
$R^{72}$, $R^{73}$, $R^{75}$, $R^{76}$, $R^{77}$, $R^{78}$ , $R^{85}$, and $R^{86}$ are each independently selected from the group consisting of a hydrogen atom, $C_{1-6}$ alkyl, $C_{1-6}$ alkoxy, $C_{1-6}$ alkylcarbonyl, phenyl, and hydroxy, wherein the $C_{1-6}$ alkyl, $C_{1-6}$ alkoxy, $C_{1-6}$ alkylcarbonyl, and phenyl may further be substituted with one or two substituents selected from the group consisting of $C_{1-6}$ alkyl, $C_{1-6}$ alkoxy, $C_{1-6}$ alkylcarbonyl, phenyl, and hydroxy,
$R^{72}$ and $R^{73}$ further each independently represent adamantly or $C_{1-6}$ alkyl substituted with $Si(OCH_3)_2(CH_3)$,
alternatively, $R^{75}$ and $R^{76}$, or $R^{77}$ and $R^{78}$ may be combined together to form $-(CH_2)_{3-5}-$,
$R^{81}$, $R^{82}$, $R^{83}$, and $R^{84}$ are substituents selected from the group consisting of $C_{1-4}$ alkyl, $C_{1-4}$ alkylcarbonyl, and $C_{1-3}$ alkoxy, wherein the $C_{1-4}$ alkyl may be substituted with one $C_{1-3}$ alkoxy group,
$R^{71}$ and $R^{74}$ is each independently a $C_{1-3}$ alkyl group, and
$X_f^-$ is a counter anion.

The "counter anion" in the general formula (I) is not particularly limited as long as it is an anion commonly used as a counter anion for an organic compound in the technical field of organic chemistry, and examples thereof include a halide anion (a chloride ion, a bromide ion, a fluoride ion, and an iodide ion), a conjugate base of an organic acid (for example, an acetate ion, and a trifluoroacetate ion), a nitrate ion, a sulfate ion, and a carbonate ion. Examples of preferred counter anions in the present invention include a trifluoromethanesulfonate ion (triflate), a chloride ion, and a nitrate ion.

As is easily understood by those skilled in the art, when the valence of the counter anion is 2 or more, an ionic bond is formed with the corresponding number of ionic functional groups.

In one embodiment of the present invention, Y and Z in Formula (I) represent a single bond.

In another embodiment, $R^{81}$, $R^{82}$, $R^{83}$, and $R^{84}$ in Formula (I) are each independently selected from the group consisting of methyl, ethyl, methylcarbonyl, isobutyl, and 2-methyl-2-methoxy-propyl.

In another embodiment, $R^{71}$ and $R^{74}$ in Formula (I) are methyl groups.

In another embodiment, $R^{72}$, $R^{73}$, $R^{75}$, $R^{76}$, $R^{77}$, $R^{78}$, $R^{85}$, and $R^{86}$ in Formula (I) are each independently selected from the group consisting of a hydrogen atom, $C_{1-6}$ alkyl, $C_{1-6}$ alkoxy, $C_{1-6}$ alkylcarbonyl, phenyl, and hydroxy.

In another embodiment, $R^{75}$ and $R^{76}$, or $R^{77}$ and $R^{78}$ in Formula (I) are combined together to form $-(CH_2)_4-$.

According to a preferred embodiment of the present invention, $R^{72}$ and $R^{73}$, $R^{75}$ and $R^{77}$, $R^{76}$ and $R^{78}$, $R^{81}$ and $R^{84}$, $R^{82}$ and $R^{83}$, and $R^{71}$ and $R^{74}$ in Formula (I) each represent the same substituent, and Y and Z represent the same substituent or both represent a single bond.

According to a further preferred embodiment of a cationic polymerization initiator used in the present invention, in Formula (I), $R^{71}$, $R^{72}$, $R^{73}$, $R^{74}$, $R^{81}$, $R^{82}$, $R^{83}$, and $R^{84}$ are methyl groups, $R^{75}$, $R^{76}$, $R^{77}$, and $R^{78}$ are hydrogen atoms, and Y and Z are single bonds.

The method for synthesizing the compound of Formula (I) is not particularly limited, but the compound of Formula (I) can be synthesized, for example, according to the method described in Japanese Unexamined Patent Application Publication No. 2017-51113.

According to a preferred embodiment of the present invention, the decomposition rate ($10^{-7}$/s) of the radical polymerization initiator I at 25°C is 25 or more. In the present invention, it is preferable to perform the polymerization reaction at a relatively low temperature of 35°C or less (desirably around 25°C), from the viewpoint of reaction operability and the applicability to the in vivo formation of the gel according to the present invention. In this case, suppressing thermal fluctuations between polymer chains is less likely to cause a termination reaction, making it easy for polymer chains to elongate. On the other hand, if the decomposition rate of a polymerization initiator is too slow, there are fewer initiator radicals, making it difficult for an initiation reaction to occur. As a result, the number of polymers decreases, making it difficult to form a gel-like structure in which polymer chains are connected to each other. It is considered that

satisfying a certain decomposition rate or more can maintain an initiator radical concentration enough to allow gelation to occur even at relatively low temperatures.

According to a preferred embodiment of the present invention, the radical polymerization initiator I is ADIP (2,2'-azobis-(2-(1,3-dimethyl-4,5-dihydro-1H-imidazol-3-ium-2-yl))propane triflate).

According to a preferred embodiment of the present invention, for the amount of the radical polymerization initiator I used in the polymerization reaction, for example, the lower limit value can be 0.3% or more, 0.5% or more, or 1.0% or more, and the upper limit value can be 2.0% or less, 1.5% or less, or 1.0% or less, relative to the addition molar amount of the main monomer M1. Among them, the amount of the radical polymerization initiator I used in the polymerization reaction is preferably 0.3 to 2.0%, more preferably 0.5 to 1.5%, and still more preferably approximately 1.0%, relative to the addition molar amount of the main monomer M1.

According to a preferred embodiment of the present invention, for the polymer gel of the present invention, from the viewpoint of high strength, the maximum value of the storage modulus G' when an angular frequency $\omega$ ($rad \cdot s^{-1}$) is changed from 0.1 to 10 at 25°C is preferably twice or more the minimum value, more preferably three times or more, and still more preferably four times or more. In a general polymer gel, it is considered that at 25°C, the maximum value of the storage modulus G' when the angular frequency $\omega$ ($rad \cdot s^{-1}$) is changed from 0.1 to 10 is generally often less than twice the minimum value.

According to a preferred embodiment of the present invention, for the polymer gel of the present invention, from the viewpoint of high viscosity, the maximum value of tan $\delta$ at an angular frequency $\omega$ ($rad \cdot s^{-1}$) of 0.1 to 10 at 25°C is preferably 0.1 or more, more preferably 0.2 or more, and still more preferably 0.3 or more. The reason for this is that the polymer gel of the present invention is considered to exhibit more highly viscous properties as the maximum value of tan $\delta$ is larger. The maximum value of tan $\delta$ "0.1" is generally considered to be a large value for polymer gels.

The polymer gel of the present invention preferably has higher strength and/or higher viscosity, from the viewpoint of applicability to a wider range of industrial fields (for example, cosmetic formulations, medical materials, and cell culture substrates).

According to a preferred embodiment of the present invention, for the polymer gel of the present invention, a stress ($\sigma$) at a breaking point is preferably 250 kPa or more, more preferably 270 kPa or more, and still more preferably 290 kPa or more, in a compression test at 25°C, from the viewpoint of high toughness. The reason for this is that a higher stress ($\sigma$) at the breaking point in the compression test allows the resistance to a higher stress ($\sigma$) and provides higher strength. Here, "toughness" in the present invention is an index of the tenacity of a material, and is preferably evaluated based on an area value up to the breaking point under a stress-strain curve, regardless of a compression test or a tensile test. According to a preferred embodiment of the present invention, for the polymer gel of the present invention, the strain ($\varepsilon$) at the breaking point is preferably 0.8 or more, more preferably 0.85 or more, and still more preferably 0.9 or more, in the compression test at 25°C, from the viewpoint of high toughness. The reason for this is that better compressibility (larger deformability) is considered to be exhibited as the strain ($\varepsilon$) at the breaking point in the compression test is larger. Surprisingly, it is considered that more highly viscous gels are likely to cause energy dissipation and/or are less likely to cause crack propagation, which may lead to increased deformability.

According to a preferred embodiment of the present invention, for the polymer gel of the present invention, the stress ($\sigma$) at the breaking point is preferably 1 kPa or more, more preferably 100 kPa or more, still more preferably 150 kPa or more, and still more preferably 200 kPa or more, in a tensile test at 25°C, from the viewpoint of high toughness. The reason for this is that a higher stress ($\sigma$) at the breaking point in the tensile test allows the resistance to a higher stress ($\sigma$) and provides higher strength. According to a preferred embodiment of the present invention, for the polymer gel of the present invention, the strain ($\varepsilon$) at the breaking point is preferably 2 or more, more preferably 3 or more, and still more preferably 4 or more, in a tensile test at 25°C, from the viewpoint of high toughness. The reason for this is that better elongation (larger deformability) is considered to be exhibited as the strain ($\varepsilon$) at the breaking point in the tensile test is larger. Surprisingly, it is considered that more highly viscous gels are likely to cause energy dissipation and/or are less likely to cause crack propagation, which may lead to increased deformability.

In particular, according to a preferred embodiment of the present invention, for the polymer gel of the present invention, from the viewpoint of high toughness, the strain ($\varepsilon$) at the break point obtained by the tensile test at 25°C is preferably 1 or more (more preferably 2 or more), and an elastic modulus (G) obtained from the stress-strain curve of the polymer gel is preferably 2300 Pa or less (more preferably 1200 Pa or less). The polymer gel with a breaking strain of 1 or more and an elastic modulus of 2300 Pa or less is soft and has excellent deformability.

According to a preferred embodiment of the present invention, the polymer gel of the present invention has adhesion properties, and the adhesion force ($N/m^2 = Pa$) is preferably 200 or more, more preferably 300 or more, and still more preferably 400 or more. Further, when the polymer gel of the present invention has adhesion properties, the object can also be skin, glass, or the like. The polymer gel of the present invention has high strength and high viscosity (for example, the above parameters such as G', G", and tan $\delta$ are satisfied), whereby polymer chains become fluid and enter the gaps in an adhesion surface, and then adhere to the adhesion surface due to the entanglement of the polymer chains, the interaction between functional groups, and the like. Further, using a polymerization initiator with a high

decomposition rate easily provides dangling chains, which are partial chains with one end that moves freely, causing the polymer chains to become entangled with an adherend. Further, it is considered that the polymer gel becomes more easily deformed, allowing the adhesive state to be easily maintained even when stress is applied. The polymer gel of the present invention preferably has adhesion force in that it can be used as an adhesive (including a binder (a pressure-sensitive adhesive)) and further in that it can be applied to a wider range of industrial fields (for example, cosmetic formulations, medical materials, and cell culture substrates).

In the present invention, the water content refers to the percentage of water contained in the gel on a weight basis. The water content can be determined by calculating the total weight ($W_{all}$) of the gel and the weight ($W_d$) of the gel that contains almost no water after being sufficiently dried. The water content is determined by the following formula 4, and the number obtained by subtracting $W_d$ from $W_{all}$ means the amount of water contained in the gel.

[Math. 4]

$$\text{Water content (\%)} = (W_{all} - W_d)/W_{all} \times 100 \qquad \text{(Formula 4)}$$

According to a preferred embodiment of the present invention, the polymer gel of the present invention exhibits an appropriate water content, and for example, the lower limit value can be 4% or more, 7% or more, and 10% or more, and the upper limit value can be 98% or less, 95% or less, and 80% or less. Among them, for the water content of the polymer gel of the present invention, the water content is preferably 98% or less and 4% or more, more preferably 95% or less and 7% or more, and still more preferably 80% or less and 10% or more. In addition, for the polymer gel of the present invention, a washing step can be added depending on the use thereof. The polymerized gel is immersed in a desired solvent (water, physiological saline, and the like) for a certain period of time, and the solvent is replaced with a fresh one as appropriate, thereby allowing unnecessary components inside the polymer gel to be washed away.

In the present invention, when the water content is controlled, the adhesion properties of the polymer gel are observed, and thus, providing a drying step such as air drying in the atmosphere, a desiccator, or an oven allows the washed gel to exhibit sufficient adhesion properties. The polymer gel of the present invention does not lose its functionality even after being dried to a certain extent, and appropriately adding water or drying can freely control the adhesion force of the polymer gel. In addition, even in a sufficiently dried state (for example, the water content is 3% or less), the polymer gel also has a characteristic of the adhesion force returning to an original level by condensation. The polymer gel of the present invention preferably has adhesion properties even after the washing step, from the viewpoint of applicability to industrial fields that involve direct application to living organisms, cells, and the like (for example, cosmetic formulations, medical materials, and cell culture substrates).

[Examples]

The present invention will be described in more detail by showing Examples below, but the present invention is not limited to these Examples.

Compression test

A compression test was performed under the following conditions.

- Apparatus: EZ-SX, Shimadzu Corporation
- Measuring unit capable of measuring loads up to 500 N
- Deformation rate: 1 mm/min
- For the shape of a gel, a cylindrical specimen with a diameter of 15 mm was used as a test piece.

In the compression test, the relationship between displacement x and force F was measured. From an initial cross-sectional area A and a height H of a sample, a strain $\varepsilon$ and a stress $\sigma$ were calculated according to the following formula: $\varepsilon = x/H$, $\sigma = F/A$.

Tensile test

A tensile test was performed under the following conditions.

- Apparatus: EZ-SX, Shimadzu Corporation
- Measuring unit capable of measuring loads up to 10 N
- Measurement temperature: 25°C

- Deformation rate: 1 mm/min
- For the shape of a gel, a rectangular specimen with a width of 9 mm, a thickness of 2 mm, and an initial length of a deformed region of approximately 10 mm (7 mm to 20 mm is possible) was used as a test piece.

In the tensile test, the relationship between the displacement x and the force F was measured three times for each test piece. From the initial cross-sectional area A and the height H of a sample, the strain $\varepsilon$ and the stress $\sigma$ were calculated according to the following formula: $\varepsilon = x/H$, $\sigma = F/A$.

Storage modulus G' and loss modulus G"

A dynamic storage modulus G' and a loss modulus G" were measured using a dynamic viscoelasticity measuring apparatus. The measurement conditions for G' and G" were as follows.

- Apparatus: MCR302, Anton Paar
- Measurement jig: flat plate
- Strain $\gamma$: 1%
- Angular frequency $\omega$: 0.1 to 10.0 rad·s$^{-1}$ -> Frequency dispersion

Loss tangent tan $\delta$

tan $\delta$ was calculated according to the formula tan $\delta$ = G"/G'.

Monomer reactivity ratios $r_1$ and $r_2$

A main monomer is set to $M_1$, and a crosslinking agent monomer is set to $M_2$. Monomer reactivity ratios $r_1$ and $r_2$ were defined as follows: $r_1 = k_{11}/k_{12}$, $r_2 = k_{22}/k_{21}$. Further, the definitions of $k_{11}$, $k_{12}$, $k_{22}$, and $k_{21}$ are as follows. In the growth process of a copolymerization reaction, when a growing species (that is, a monomer at the reactive end of a growing polymer) is $M_1$* or $M_2$*, each growing species can be reacted with $M_1$ or $M_2$. Specifically, the rate constant of the process in which $M_1$* reacts with $M_1$ to generate $M_1$* was defined as $k_{11}$, the rate constant of the process in which $M_1$* reacts with $M_2$ to generate $M_2$* was defined as $k_{12}$, the rate constant of the process in which $M_2$* reacts with $M_1$ to generate $M_1$* was defined as $k_{21}$, and the rate constant of the process in which $M_2$* reacts with $M_2$ to generate $M_2$* was defined as $k_{22}$.

The monomer reactivity ratios $r_1$ and $r_2$ were determined by performing several polymerizations with various monomer ratios and relating the composition of a copolymer generated at the beginning of the polymerization to the charged monomer composition. The composition of the copolymer was specified by $^1$H-NMR. The charged monomer ratio was set to $F = [M_1]/[M_2]$ and the ratio in a polymer was set to $f = d[M_1]/d[M_2]$, and $r_1$ and $r_2$ were calculated using Formula 2 according to the Kelen-Tudos method.
[Math. 5]

$$\eta = \left(r_1 + \frac{r_2}{a}\right)\xi - \frac{r_2}{a} \qquad \text{(Formula 2)}$$

wherein a is a constant, and a geometric mean between the maximum value and the minimum value of $F^2/f$; in addition,

$\eta = \frac{F(1-1/f)}{a+F^2/f}$, and $\xi = \frac{F^2/f}{a+F^2/f}$.

Decomposition rate constant ($10^{-7}$ s$^{-1}$)

The decomposition rate was measured as follows. In a case of an azo-based radical polymerization initiator, the concentration of the polymerization initiator can be detected by measuring the absorbance derived from an azo group, and thus, the decomposition rate was determined by determining the rate of change in the polymerization initiator concentration at the reaction temperature. Alternatively, a decomposition rate $k_d$ is represented by the following Arrhenius equation (Formula 3), and thus was calculated using a value reported in literature. In Formula 3, A is a frequency factor, E (kJ·mol$^{-1}$·K$^{-1}$) is activation energy, and R is a gas constant.
[Math. 6]

$$k_d = A \cdot \exp\left(-\frac{E}{RT}\right) \quad \text{(Formula 3)}$$

Adhesion force

Adhesion force was measured under the following conditions.

- Apparatus: EZ-SX, Shimadzu Corporation
- The state where a gel and a sample were separated was defined as force F = 0.
- The sample was adhered to the gel (F < 0), and the displacement was adjusted such that F = 0 (x = 0).
- The displacement was applied in a direction of peeling the sample off the gel, and the force was measured.
- Contact area: 1 cm × 1 cm

Example 1: Synthesis of viscous gel with ADIP

An imidazolium cationic radical polymerization initiator: ADIP (2,2'-azobis-(2-(1,3-dimethyl-4,5-dihydro-1H-imidazol-3-ium-2-yl))propane triflate) was used as a polymerization initiator, and a radical polymerization reaction was performed using MPC (2-methacryloyloxyethylphosphorylcholine) as a main monomer and MBAAm (N,N'-methylenebisacrylamide) as a crosslinking agent monomer to synthesize a gel. ADIP was synthesized according to the method described in Japanese Unexamined Patent Application Publication No. 2017-51113.

Specifically, the radical polymerization reaction was performed according to the following procedure: (i) the main monomer, the crosslinking agent monomer, and the radical polymerization initiator were dissolved in water (in a sample tube or a Falcon tube, appropriately in an ice bath); (ii) Ar bubbling was performed for five minutes (in an ice bath); (iii) a resulting mixture (a pre-gel solution) was put into a mold; and (iv) it was left at 25°C. The dose of each reagent was as shown in Table 1 below.

[Table 1]

Table 1: Reagents used to synthesize gel with ADIP polymerization initiator

| Reagent | Amount | Amount (mmol) | Molar ratio to addition amount of MPC (%) |
|---|---|---|---|
| MPC | 1.33 q | 4.5 | 100 |
| MBAAm | 28 mg | 0.18 | 4 |
| ADIP | 27 mg | 0.045 | 1 |
| Water | 3 mL | | |

A compression test and a tensile test were performed on the gel obtained by the above radical polymerization reaction. The results of these tests are shown in Fig. 1. In the graphs shown in Fig. 1, the vertical axis indicates the strength of stress, and the horizontal axis indicates strain at a breaking point. In each graph shown in Fig. 1, the plot on the right is for the gel obtained by the above radical polymerization reaction, and the plot on the left is for a normal chemical gel. It has been found that the gel described in the present example, indicated as "viscous gel" in Fig. 1, is a polymer gel with high strength and high viscosity that has a characteristic of not being brittle (being unbreakable) and being excellent in elongation.

Example 2: Investigation of conditions for synthesis of viscous gel

2.1. Definition of viscosity index and investigation of monomer structure

A gel behaves as a viscoelastic body that has both solid and liquid properties. Therefore, in the evaluation of the viscoelastic behavior of the gels, in the case where when the angular frequency ω ($rad \cdot s^{-1}$) is changed from 0.1 to 10, the maximum value of the storage modulus G' is less than twice the minimum value, or the maximum value of tan δ is 0.1 or less, the gel was evaluated as "elastic", and in the case where when the angular frequency ω ($rad \cdot s^{-1}$) is changed from 0.1 to 10, the maximum value of the storage modulus G' is more than or equal to twice the minimum value, and the maximum value of tan δ is more than 0.1, the gel was evaluated as "viscoelastic". Hereinafter, the value obtained by dividing the maximum value of the storage modulus G' by the minimum value when the angular frequency ω ($rad \cdot s^{-1}$) is changed from 0.1 to 10 may be represented as "ratio of maximum value/minimum value of G'".

Under the conditions of [main monomer] = 1.5 M, [crosslinking agent monomer MBAAm] = 60 mM (4% relative to the molar amount of the main monomer), and [polymerization initiator] = 15 mM (1% relative to the molar amount of the main monomer, 15 mM of TEMED is also added when APS is used), gels were synthesized from various monomers, and dynamic viscoelasticity measurement was performed. The results are shown in Figs. 1-2 to 1-5 and Table 2. Further, Table 3 shows the classification of "elastic" and "viscoelastic" derived from these results.

[Table 2]

Table 2: Dynamic viscoelasticity of various polymers

| Polymer | Synthesis with APS/TEMED | | Synthesis with ADIP | |
|---|---|---|---|---|
| | Ratio of maximum value/ minimum value of G' | Maximum value of tan δ | Ratio of maximum value/ minimum value of G' | Maximum value of tan δ |
| PMPC | 1.0 | 0.026 | 5.0 | 0.97 |
| PmOEGMA | 1.3 | 0.15 | 6.5 | 0.96 |
| PSPM | 1.0 | 0.028 | 9.5 | 1.2 |
| PDMAAm | 1.1 | 0.053 | 1.1 | 0.089 |
| PAMPS | 1.3 | 0.10 | 1.2 | 0.095 |
| PHEA | 1.4 | 0.13 | 1.2 | 0.37 |
| PMDBS | 0.97 | 0.68 | 7.6 | 0.96 |

[Table 3]

Table 3: Result of screening for various polymers

| Polymer | Main chain structure | Side chain | Synthesis with APS/TEMED | Synthesis with ADIP |
|---|---|---|---|---|
| PMPC | Methacrylate | Zwitterionic | Elastic | Viscoelastic |
| PmOEGMA | Methacrylate | Nonionic | Elastic | Viscoelastic |
| PSPM | Methacrylate | Anionic | Elastic | Viscoelastic |
| PDMAAm | Acrylamide | Nonionic | Elastic | Elastic |
| PAMPS | Acrylamide | Anionic | Elastic | Elastic |
| PHEA | Acrylate | Nonionic | Elastic | Elastic |
| PMDBS | Methacrylamide | Zwitterionic | Elastic | Viscoelastic |

tan δ of the PMPC gel synthesized with ADIP, which was evaluated as viscoelastic, was 0.3 or more (this value is considered to be large as compared with general chemical gels), and the storage modulus exhibited frequency dependence. This indicates that the material is highly viscous, and it has been considered that the effect of physical crosslinking due to a non-covalent bond was observed in addition to chemical crosslinking. In addition to MPC, a polymer gel with high strength and high viscosity that had strong viscous behavior in addition to elastic behavior was obtained using monomers with a methacrylate skeleton and a methacrylamide skeleton, regardless of the ionicity or nonionicity of a side chain.

## 2.2. Combinations of monomers and crosslinking agents

### 2.2.1. Combinations of monomers and crosslinking agents: one becoming viscous/one not becoming viscous

As the investigation on the structure of a chemical crosslinking agent, PEG dimethacrylate (molecular weight 550) was used as a methacrylate-based crosslinking agent monomer in place of MBAAm in the reagents shown in Table 1, and MPC was polymerized with an ADIP polymerization initiator, resulting in a brittle and elastic gel. This indicates that the skeleton of the crosslinking agent monomer was also an important factor.

### 2.2.2. Mechanism consideration from viewpoint of reactivity

It was predicted that the increase in gel viscosity during radical polymerization was influenced by the reactivity of a crosslinking agent monomer and a main monomer during copolymerization. Thus, the reactivity of an acrylamide monomer and a methacrylate monomer was evaluated. Fig. 2 shows an Arrhenius plot of the decomposition rate as the

reactivity of ADIP in water. The kinetic parameters for the decomposition were as follows: activation energy E = 122.9 kJ $mol^{-1}$, frequency factor: A = 1.1 $\times$ $10^{16}$ $s^{-1}$.

(i) Homopolymerization

In homopolymerization, the polymerization of methacrylate proceeded more slowly than that of acrylamide when ADIP or APS/TEMED was used as the polymerization initiator (Fig. 3). Further, when ADIP was used, the polymerization proceeded more slowly than when APS/TEMED was used. This was considered to be due to the slow generation rate of radicals.

(ii) Copolymerization

The monomer reactivity ratios between MPC and an acrylamide monomer with a different backbone and between MPC and a methacrylate monomer with the same backbone were evaluated. Here,

- Monomer A (MA) = MPC
- Monomer B (MB) = dimethylacrylamide DMAAm or oligoethylene glycol methacrylate mOEGMA, and
- Monomer reactivity ratio: $r_A = k_{AA}/k_{AB}$, $r_B = k_{BB}/k_{BA}$. A polymerization reaction was performed while changing the charging ratio, and the amount of introduction to a polymer was evaluated by $^1$H-NMR. Further, the monomer reactivity ratio was analyzed using the Kelen-Tudos method. The results are shown in Fig. 4. In Fig. 4, MA is represented as $M_1$, and MB is represented as $M_2$.

In the copolymerization of MPC and DMAAm, the results of $r_A = k_{AA}/k_{AB} = 8.72$ and $r_B = k_{BB}/k_{BA} = 0.68$ were obtained. This indicates that MPC with a methacrylate structure is likely to be continuous while DMAAm with an acrylamide structure is likely to be dispersed. On the other hand, in the copolymerization of MPC and mOEGMA, both of which have a methacrylate structure, the results of $r_A = k_{AA}/k_{AB} = 1.06$ and $r_B = k_{BB}/k_{BA} = 1.50$ were obtained. Both reactivities were close to 1, indicating that the monomers are introduced at random to some degree as long as the skeletons are the same.

From these results, in a case where for the above monomer A and the above monomer B, $r_A > r_B$, and further, $r_A > 1$ and $r_B < 1$, a combination of reactivities in which the above monomer B was likely to be dispersed was provided. It has been considered that these reactivities greatly affect the structure of a basic main chain, and thus, the monomer A and the monomer Bare appropriately selected such that $r_A > r_B$ is also established between the main monomer corresponding to the above monomer A and the crosslinking agent monomer having the same main chain structure as the above monomer B, and still more preferably, $r_A > 1$ and $r_B < 1$ are established to allow the positions of a crosslinking agent in a desired gel structure to be dispersed more, and as a result, a gel exhibiting viscoelastic behavior is obtained.

2.3. Polymerization initiators and crosslinking agent monomers

2.3.1. Effect of polymerization initiators

Gel synthesis using ADIP was compared with cases of using APS/TEMED, which was a commonly used aqueous-based polymerization initiator, and VA-044 (2,2'-azobis[2-(2-imidazolin-2-yl)propane]dihydrochloride) and V-50 (2,2'-azobis(2-methylpropionamidine)dihydrochloride), which were azo-based polymerization initiators. The polymerization reaction was performed under the condition of [main monomer MPC] = 1.5 M, [crosslinking agent monomer MBAAm] = 60 mM (4% relative to the molar amount of MPC), and [polymerization initiator] = 15 mM (1% relative to the molar amount of MPC, 15 mM of TEMED is also added when APS is used). The results of dynamic viscoelasticity measurement of the obtained polymers are shown in Table 4 and Fig. 4-2.

[Table 4]

Table 4: Dynamic viscoelasticity of various polymers

| Polymerization initiator | Ratio of maximum value/minimum value of G' | Maximum value of tan $\delta$ |
|---|---|---|
| ADIP | 4.8 | 0.96 |
| APS/TEMED | 1.1 | 0.026 |
| VA-044 | 1.5 | 0.18 |
| V-50 | 1.4 | 0.18 |

Under the above polymerization conditions, it was observed that a gel became significantly viscous and a

polymer gel with high strength and high viscosity was obtained when ADIP was used.

2.3.2. Effect of ratios of polymerization initiator and crosslinking agent monomer in polymerization reaction with ADIP polymerization initiator

In the polymerization reaction with an ADIP polymerization initiator, the ratios of the polymerization initiator and the crosslinking agent to the main monomer were changed, and the physical properties of each obtained polymer were evaluated. MPC was used as the main monomer, and MBAAm was used as the crosslinking agent. The concentration of the main monomer was set in the range of 1.0 M to 2.0 M. The results are shown in Fig. 5.

The X axis (the horizontal axis) of the graph shown in Fig. 5 is the molar ratio of the addition amount of the crosslinking agent monomer to the addition amount of the main monomer, and the Y axis (the vertical axis) is the molar ratio of the addition amount of the polymerization initiator to the addition amount of the main monomer. In Fig. 5, the mark ◦ as a viscous gel indicates that a polymer gel with high strength and high viscosity was obtained, the mark Δ as a brittle gel indicates that a polymer gel without high strength or high viscosity was obtained, and the mark × as a viscous liquid (sol) indicates that no polymer gel was obtained. Therefore, in Fig. 5, the range in which a polymer gel with high strength and high viscosity was obtained is surrounded by a dotted line.

The polymer gel with high strength and high viscosity in Fig. 5 refers to a gel in which when the angular frequency ω ($rad \cdot s^{-1}$) was changed from 0.1 to 10, the maximum value of the storage modulus G' was more than or equal to twice the minimum value, and the maximum value of tan δ was more than 0.1. First, it has been suggested that the molar ratio of the crosslinking agent monomer to the main monomer is 12% or less (the dotted line on the right side of the graph indicates 12%), preferably 0.1 to 12%, more preferably 1 to 10%, and still more preferably 2 to 5%. In addition, the dotted line on the left side of the graph is represented by Y = 0.66X + 0.0017, and thus it has been found that the addition molar ratio $C_M$ of the crosslinking agent monomer M2 to the main monomer M1, and the addition molar ratio $I_M$ of the polymerization initiator to the main monomer M1 desirably satisfy $I_M \leq 0.66C_M + 0.0017$.

2.3.3. Effect of ratios of polymerization initiator and crosslinking agent monomer in polymerization reaction with APS/TEMED polymerization initiator

In order to change the crosslinking density, in the polymerization reaction with APS/TEMED polymerization initiator, the ratio of the crosslinking agent to the main monomer was changed to measure the dynamic storage modulus G' and the loss modulus G" of each obtained gel. MPC was used as the main monomer, and MBAAm was used as the crosslinking agent. The molar ratio of the addition amount of APS/TEMED to the addition amount of MPC was 1%. The results of dynamic viscoelasticity measurements of the obtained polymers are shown in Table 5 and Fig. 5-2. Further, the results of the polymer compression test are shown in Fig. 6.

[Table 5]

Table 5: Dynamic viscoelasticity of polymers

| Molar ratio of addition amount of MBAAm to addition amount of MPC | Ratio of maximum value/minimum value of G' | Maximum value of tan δ |
|---|---|---|
| 4% | 1.1 | 0.026 |
| 1% | 2.9 | 0.62 |
| 0.4% | 5.7 | 0.78 |

It has been found from the results of dynamic viscoelasticity measurement that when the molar ratio of the addition amount of MBAAm to the addition amount of MPC (hereinafter sometimes referred to as the crosslinking agent molar ratio) was changed to 1% or 0.4%, frequency dependence (behavior in which G' decreases as ω decreases) was observed in G', and tan δ also increased. In addition, in the graph shown in Fig. 6, the plot on the left is for a gel with a crosslinking agent molar ratio of 4%, the middle plot is for a gel with a crosslinking agent molar ratio of 1%, and the plot on the right is for a gel with a crosslinking agent molar ratio of 0.4%. In the graph shown in Fig. 6, the vertical axis represents the strength of stress, and the horizontal axis represents strain at the breaking point. It has been found from the results of the compression test shown in Fig. 6 that this gel is a polymer gel with high strength and high viscosity, having a characteristic of not being brittle (being unbreakable), similar to the gel synthesized with the ADIP polymerization initiator. Therefore, it has been found that even when an APS/TEMED polymerization initiator is used, the crosslinking agent molar ratio is set to 1% or less to exhibit dynamic viscoelastic behavior as a polymer gel with high strength and high viscosity.

Example 3: Adhesion properties of viscous gel to solid material and living organism

The polymer gel with high strength and high viscosity obtained in the above embodiment was tested for adhesion properties (adhesion force). Specifically, the test was performed for the polymer gel with high strength and high viscosity obtained with the ADIP polymerization initiator in Example 1, and the polymer gel with high strength and high viscosity obtained with the APS/TEMED polymerization initiator in 2.3.3. of Example 2 (the molar ratio of the addition amount of MBAAm to the addition amount of MPC was 1% and 0.4%).

All of the gels tested exhibited an adhesion force of 200 ($N/m^2$ = Pa) or more and a peeling distance of 0.3 mm or more for both glass and chicken skin (a skin model).

Further, in Example 1 in which an ADIP initiator is used, the adhesion test to glass was performed on the gel synthesized by changing the main monomer from MPC to mOEGMA, and then an adhesion force of 200 ($N/m^2$ = Pa) or more and a peeling distance of 0.3 mm or more were shown.

Therefore, it has been found that these polymer gels with high strength and high viscosity had sufficient adhesion force.

Example 4: Polymerization initiator to be used

Parameters related to the decomposition rates of polymerization initiators used in the above examples are summarized in Table 6 below.

[Table 6]

| Table 6: Parameters for decomposition rates of polymerization initiators | | | | |
|---|---|---|---|---|
| Polymerization initiator | V-50 | VA-044 | ADIP | APS/TEMED |
| Decomposition rate at 25°C ($10^{-7}$/s) | 1.7 | 14 | 32 | $1.3 \times 10^9$ |

In the above examples, a gel having preferable physical properties is obtained when ADIP and APS/TEMED are used, and the decomposition rate of a polymerization initiator is considered to be important for the crosslinking density and the crosslink distribution in a gel, and thus it has been considered that the decomposition rate ($10^{-7}$/s) at 25°C of a polymerization initiator to be used is preferably 25 or more, and more preferably 30 or more.

Example 5: Calculation of reactivity ratios of main monomers and crosslinking agent monomer

Reactivity ratios of main monomers and a crosslinking agent monomer were calculated by performing $^1$H-NMR measurement (JEOL ECS-400 spectrometer) according to the following procedure with the Kelen-Tudos method described above.

The reactivity ratios of the main monomers and the crosslinking agent monomer were calculated according to the following procedure.

1. The main monomer (DMAAm, MPC, or mOEGMA) and the crosslinking agent monomer (MBAAm) were dissolved in water (total monomer concentration = 0.35 M, volume = 3 mL, a 15 mL Falcon tube was used).
2. To confirm the ratio before the measurement, 60 $\mu$L was sampled, and further diluted with 500 $\mu$L of $D_2O$, and $^1$H-NMR measurement was performed (measurement (1): before reaction).
3. ADIP was added to the solution of 1. (3.5 mM).
4. Ar bubbling was performed for five minutes.
5. The lid of the 15 mL Falcon tube was closed and left at 25°C.
6. After two hours, 60 $\mu$L was sampled, and further diluted with 500 $\mu$L of $D_2O$, and $^1$H-NMR measurement was performed (measurement (2): two hours after reaction).

Results

For the measurement (1) and the measurement (2), as representative examples, the results when measurement was performed using MPC as a main monomer and MBAAm as a crosslinking agent monomer are shown in Figs. 7 and 8.

For each combination of the main monomer (DMAAm, MPC, or mOEGMA) and the crosslinking agent monomer (MBAAm), the consumption amount was tracked by $^1$H-NMR while changing a charge as shown in Table 7 below. The plots obtained from the analysis are shown in Fig. 9. Note that $\eta$ on the vertical axis and $\xi$ on the horizontal axis indicate dimensionless numbers defined by Math. 2.

[Table 7]

| Table 7: Ratio of number of charged C=C bonds before reaction, and ratio of introduction to polymer chain by consumption amount after reaction, calculated from $^1$H-NMR measurement | | | | |
|---|---|---|---|---|
| M1 = DMAAm<br>M2 = MBAAm | Before reaction (ratio of number of C=C bonds) | | After reaction (ratio of introduction to polymer chain by consumption amount) | |
| | M1 | M2 | M1 | M2 |
| | 94.6 | 5.4 | 89.1 | 10.9 |
| | 91.0 | 9.0 | 83.8 | 16.2 |
| | 86.8 | 13.2 | 72.8 | 27.2 |
| | 79.8 | 20.2 | 58.9 | 41.1 |
| M1 = MPC<br>M2 = MBAAm | Before reaction (ratio of number of C=C bonds) | | After reaction (ratio of introduction to polymer chain by consumption amount) | |
| | M1 | M2 | M1 | M2 |
| | 83.4 | 16.6 | 91.6 | 8.4 |
| | 69.8 | 30.2 | 80.9 | 19.1 |
| | 51.7 | 48.3 | 66.4 | 33.6 |
| | 37.9 | 62.1 | 44.4 | 55.6 |
| M1= mOEGMA<br>M2 = MBAAm | Before reaction (ratio of number of C=C bonds) | | After reaction (ratio of introduction to polymer chain by consumption amount) | |
| | M1 | M2 | M1 | M2 |
| | 84.2 | 15.8 | 91.9 | 8.1 |
| | 69.1 | 30.9 | 82.6 | 17.4 |
| | 53.2 | 46.8 | 71.3 | 28.7 |
| | 40.8 | 59.2 | 58.5 | 41.5 |

The slope and the intercept of an approximate straight line were calculated from the plots in Fig. 9. Specifically, the calculation was performed based on Formula 2 where the slope of the approximate straight line is $r_1 + r_2/a$ and the intercept is $-r_2/a$. The reactivity ratio for each combination of the main monomer (DMAAm, MPC, or mOEGMA) and the crosslinking agent monomer (MBAAm) is shown in Table 8 below.

[Table 8]

Table 8: Values of monomer reactivity ratios of main monomers and crosslinking agent monomer

| Main monomer | | | Crosslinking agent monomer | | | | | |
|---|---|---|---|---|---|---|---|---|
| Abbrevi- ation | Main chain structure | Property | Abbrevi- ation | Main chain structure | Property | $r_1$ | $r_2$ | Evaluation of viscoelasticity |
| MPC | Methacrylate | Zwitterionic | MBAAm | Acrylamide | Nonionic | 2.36 | 1.10 | Viscoelastic |
| mOEGMA | Methacrylate | Nonionic | MBAAm | Acrylamide | Nonionic | 2.11 | 0.49 | Viscoelastic |
| DMAAm | Acrylamide | Nonionic | MBAAm | Acrylamide | Nonionic | 0.56 | 4.56 | Elastic |

Example 6: Tensile test

A tensile test was performed on three gels of a gel that was polymerized as a polymer gel with high strength and high viscosity in Examples 2.1. and 2.2.1., that is, a gel with the radical polymerization initiator ADIP, the main monomer mOEGMA, and the crosslinking agent monomer MBAAm (named ADIP-mOEGMA-MBAAm); a gel that was polymerized as an elastic gel exhibiting elastic behavior, that is, a gel with the radical polymerization initiator ADIP, the main monomer MPC, and the crosslinking agent monomer PEG dimethacrylate (named ADIP-MPC-PEGDM); and a gel that was polymerized as an elastic gel, that is, a gel with the radical polymerization initiator ADIP, the main monomer DMMAm, and the crosslinking agent monomer MBAAm (named ADIP-DMMAm-MBAAm). The results are shown in Fig. 10.

Further, a tensile test was also performed on the polymer gel with high strength and high viscosity obtained in Example 2 (more specifically, Example 2.3.2.). To synthesize the gel, a radical polymerization reaction was performed with ADIP as a radical polymerization initiator, MPC as a main monomer, and MBAAm as a crosslinking agent monomer. The polymerization reaction was performed under a condition of [main monomer] = 1.5 M, [crosslinking agent monomer] = 60, 75, and 105 mM (4, 5, and 7% relative to the molar amount of the main monomer, respectively), and [ADIP] =15 mM (1% relative to the molar amount of the main monomer). The gel with a crosslinking agent monomer MBAAm molar ratio of 4% was called ADIP-MPC-MBAAm (4), the gel with 5% was called ADIP-MPC-MBAAm (5), and the gel with 7% was called ADIP-MPC-MBAAm (7). A tensile test was performed on the obtained polymer gel with high strength and high viscosity. The results are shown in Fig. 11.

In the graphs shown in Figs. 10 and 11, the vertical axis represents the strength of stress, and the horizontal axis represents strain at the breaking point. It has been found from the tensile test results shown in Figs. 10 and 11 that the polymer gel with high strength and high viscosity obtained in Example 2 has a characteristic in which the strain at the breaking point is 2 or more in the tensile test, and the gel does not break (is not brittle) when exhibiting this characteristic.

Example 7: Relationship between elastic modulus and breaking strength

The elastic modulus and the breaking strain obtained from the stress-strain curve of each gel shown in Figs. 10 and 11 were plotted for each gel, and trends in the correlation with synthesis conditions were investigated. The results are shown in Fig. 12.

It has been found that the relationship between the elastic modulus G and the breaking strain is approximately linear in a log-log plot, and as the elastic modulus becomes smaller than approximately 2300 Pa, the breaking strain increases as in Fig. 12. That is, it has been found that a gel with a breaking strain of 1 or more and an elastic modulus of 2300 Pa or less is a polymer gel with high strength and high viscosity that is soft and excellent in deformability.

Next, a comparison was made with a gel (polymerized with APS, the main monomer was MPC or DMAAm, the crosslinking agent monomer was MBAAm, the former is referred to as known literature APS-MPC-MBAAm, and the latter is referred to as known literature APS-DMAAm-MBAAm) disclosed in known literature (Norioka et al. NPG Asia Materials (2021) 13:34). The values of the elastic modulus and the breaking strain in the tensile test of the gel disclosed in the above literature were superimposed and plotted on the elastic modulus-breaking strain plot in Fig. 12. The known literature APS-MPC-MBAAm was plotted as •, and the known literature APS-DMAAm-MBAAm was plotted as ■. The results are shown in Fig. 13.

As shown in Fig. 13, the gels disclosed in the known literature are out of the range of a breaking strain of 1 or more and an elastic modulus of 2300 Pa or less, and it is obvious in the literature that they have higher strength than normal gels, but it has been shown that they have no characteristics of a gel that is soft and has excellent deformability.

In addition, it has been shown that among the gels shown in Fig. 12, a gel satisfying the following Formula 5 has a characteristic of a gel that has a lower elastic modulus and thus can be deformed even by small external force, and has a large breaking strain and can withstand large deformation when the breaking strain is set to $\lambda$ and the elastic modulus is set to G (Fig. 13).

[Math. 7]

$$\lambda \leq 715.94\ G^{(-0.659)} \qquad \text{(Formula 5)}$$

Example 8: Amount of water of produced gel

A gel was synthesized by performing a radical polymerization reaction with ADIP as a radical polymerization initiator, MPC as a main monomer, and MBAAm as a crosslinking agent monomer. The polymerization reaction was performed under the condition of [main monomer] = 1.5 M, [crosslinking agent monomer] = 60 mM (4% relative to the molar amount of the main monomer), and [ADIP] = 15 mM (1% relative to the molar amount of the main monomer).

The polymerized gel was equivalent to the gel shown in Example 1, exhibited the physical properties of a polymer gel with high strength and high viscosity, and exhibited strong adhesion force to glass (Fig. 14(A)).

The polymerized gel was immersed in water for two days to remove unreacted substances, and then dried in a desiccator or an oven (90°C) to evaporate and remove a certain amount of water from the gel. Thereafter, the weight of the gel and the weight of the gel after being sufficiently dried were measured to determine the water content. The water content was calculated according to Formula 4.

Fig. 14 shows the adhesion force to the glass substrate for each water content. Stroke (mm) in Fig. 14 indicates the distance of the gel elongation in the tensile test, and the adhesion force (kPa) indicates the adhesion force of the gel to the glass. The polymer gel obtained even with a water content of 98% exhibited an adhesion force of 200 Pa or more (Fig. 14(B)), but as the water content was reduced by drying further, the adhesion force to the glass substrate gradually became stronger (Fig. 14(C)), and the peeling distance became 0.3 mm or more. Further, the water content reached approximately 3% after drying sufficiently, and then the adhesion force disappeared completely (Fig. 14(D)), and it has been clarified that maintaining a certain level of water content is a necessary condition for the generation of adhesion force.

However, it has been clarified that dropping water again onto a sufficiently dried gel with a water content of approximately 3% for condensation increases the adhesion force again as shown in Fig. 15 (the vertical axis and the horizontal axis are the same as Fig. 14). The present properties of the gel are significantly effective in industrial applications, and it has been shown that transporting the material to the desired place in a dried state and adding necessary water during use can provide a polymer gel with high strength and high viscosity that can control adhesion properties.

## Claims

**1.** A polymer gel comprising

a structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of an addition amount of the crosslinking agent monomer M2 to an addition amount of the main monomer M1 is 12% or less,
an addition molar ratio $C_M$ of the crosslinking agent monomer M2 to an addition amount of the main monomer M1 and an addition molar ratio $I_M$ of the radical polymerization initiator I to an addition amount of the main monomer M1 satisfy a condition of $I_M \leq 0.66C_M + 0.0017$, and
the radical polymerization initiator I is a compound having a chemical structure of a general formula (I):

[Chem. 1]

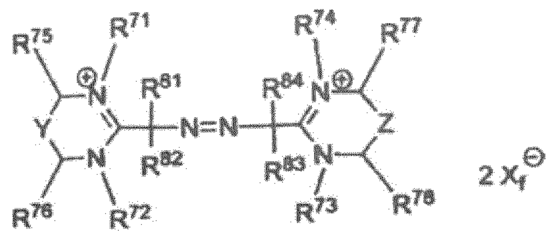

(I)

wherein Y represents a single bond or $CR^{85}$,
Z represents a single bond or $CR^{86}$,
$R^{72}$, $R^{73}$, $R^{75}$, $R^{76}$, $R^{77}$, $R^{78}$, $R^{85}$, and $R^{86}$ are each independently selected from the group consisting of a hydrogen atom, $C_{1-6}$ alkyl, $C_{1-6}$ alkoxy, $C_{1-6}$ alkylcarbonyl, phenyl, and hydroxy, wherein the $C_{1-6}$ alkyl, $C_{1-6}$ alkoxy, $C_{1-6}$ alkylcarbonyl, and phenyl may further be substituted with one or two substituents selected from the group consisting of $C_{1-6}$ alkyl, $C_{1-6}$ alkoxy, $C_{1-6}$ alkylcarbonyl, phenyl, and hydroxy,
$R^{72}$ and $R^{73}$ may further each independently represent adamantyl or $C_{1-6}$ alkyl substituted with $Si(OCH_3)_2(CH_3)$,

alternatively, $R^{75}$ and $R^{76}$, or $R^{77}$ and $R^{78}$ may be combined together to form $-(CH_2)_{3-5}-$,
$R^{81}$, $R^{82}$, $R^{83}$, and $R^{84}$ are substituents selected from the group consisting of $C_{1-4}$ alkyl, $C_{1-4}$ alkylcarbonyl, and $C_{1-3}$ alkoxy, wherein the $C_{1-4}$ alkyl may be substituted with one $C_{1-3}$ alkoxy group,
$R^{71}$ and $R^{74}$ are each independently a $C_{1-3}$ alkyl group, and
$X_f^-$ is a counter anion.

**2.** The polymer gel according to claim 1, wherein the monomer reactivity ratio $r_1$ of the main monomer M1 and the monomer reactivity ratio $r_2$ of the crosslinking agent monomer M2 further satisfy conditions of $r_1 > 1$ and $r_2 < 1$.

**3.** The polymer gel according to claim 1, wherein at 25°C, a maximum value of tan $\delta$ at an angular frequency $\omega$ ($rad \cdot s^{-1}$) of 0.1 to 10 is 0.1 or more, and a maximum value of a storage modulus G' when the angular frequency $\omega$ ($rad \cdot s^{-1}$) is changed from 0.1 to 10 is more than or equal to twice a minimum value.

**4.** The polymer gel according to claim 1, wherein a strain ($\varepsilon$) at a breaking point in a compression test is 0.8 or more at 25°C.

**5.** The polymer gel according to claim 1, wherein a strain ($\varepsilon$) at a breaking point in a tensile test is 2 or more at 25°C.

**6.** The polymer gel according to claim 1, wherein at 25°C, an elastic modulus (G) is 2300 Pa or less, and a strain ($\varepsilon$) at a breaking point is 1 or more in a tensile test.

**7.** The polymer gel according to claim 1, wherein a water content is 4% or more and 98% or less at 25°C.

**8.** The polymer gel according to claim 1, wherein $r_1 > 3$ and $r_2 < 0.7$.

**9.** The polymer gel according to claim 1, wherein a product of $r_1$ and $r_2$, $r_1 \cdot r_2$, is 2 or more.

**10.** The polymer gel according to claim 1, wherein a combination of the main monomer M1 and the crosslinking agent monomer M2 is a combination of methacrylamide and acrylamide, or a combination of methacrylate and acrylamide.

**11.** The polymer gel according to claim 1, wherein

the main monomer M1 is a monomer selected from the group consisting of MPC (2-methacryloyloxyethyl phosphorylcholine), mOEGMA (oligoethylene glycol methacrylate), SPM (potassium 3-(methacryloyloxy)propanesulfonate), and MDBS (4-[(3-methacrylamidopropyl)dimethylammonio]butane-1-sulfonate), and
the crosslinker agent monomer M2 is MBAAm (N,N'-methylenebisacrylamide).

**12.** The polymer gel according to claim 1, wherein a decomposition rate ($10^{-7}$/s) at 25°C of the radical polymerization initiator I is 25 or more.

**13.** The polymer gel according to claim 1, wherein the radical polymerization initiator I is ADIP (2,2'-azobis-(2-(1,3-dimethyl-4,5-dihydro-1H-imidazol-3-ium-2-yl))propane triflate).

**14.** The polymer gel according to claim 1, which has an adhesion property.

**15.** The polymer gel according to claim 1, wherein the main monomer M1 is methacrylate.

**16.** A method for producing the polymer gel according to any one of claims 1 to 15, comprising

a step of performing a polymerization reaction with the main monomer M1, the crosslinking agent monomer M2, and the radical polymerization initiator I, wherein
a molar ratio of an addition amount of the crosslinking agent monomer M2 to an addition amount of the main monomer M1 is 12% or less, and
an addition molar ratio $C_M$ of the crosslinking agent monomer M2 to an addition amount of the main monomer M1, and an addition molar ratio $I_M$ of the polymerization initiator I to an addition amount of the main monomer M1 satisfy a condition of $I_M \leq 0.66C_M + 0.0017$.

**17.** The method according to claim 16, wherein the polymerization reaction is performed at a temperature of 35°C or less.

**18.** A polymer gel comprising

A structure derived from a main monomer M1, a crosslinking agent monomer M2, and a radical polymerization initiator I as a constituent element, wherein
a monomer reactivity ratio $r_1$ of the main monomer M1 and a monomer reactivity ratio $r_2$ of the crosslinking agent monomer M2 satisfy a condition of $r_1 > r_2$,
a molar ratio of a content of the crosslinking agent monomer M2 to a content of the main monomer M1 is 12% or less,
a content molar ratio $C_M$ of the crosslinking agent monomer M2 to a content of the main monomer M1, and a content molar ratio $I_M$ of the radical polymerization initiator I to a content of the main monomer M1 satisfy a condition of $I_M \leq 0.66C_M + 0.0017$, and
the radical polymerization initiator I is a compound having a chemical structure of a general formula (I):

[Chem. 2]

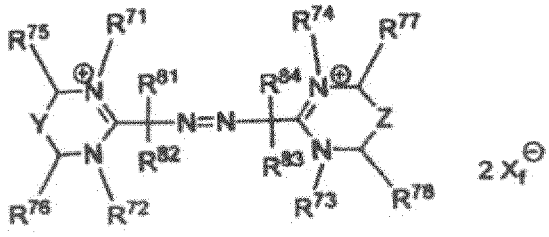

(I)

wherein Y represents a single bond or $CR^{85}$,
Z represents a single bond or $CR^{86}$,
$R^{72}$, $R^{73}$, $R^{75}$, $R^{76}$, $R^{77}$, $R^{78}$ , $R^{85}$, and $R^{86}$ are each independently selected from the group consisting of a hydrogen atom, $C_{1-6}$ alkyl, $C_{1-6}$ alkoxy, $C_{1-6}$ alkylcarbonyl, phenyl, and hydroxy, wherein the $C_{1-6}$ alkyl, $C_{1-6}$ alkoxy, $C_{1-6}$ alkylcarbonyl, and phenyl may further be substituted with one or two substituents selected from the group consisting of $C_{1-6}$ alkyl, $C_{1-6}$ alkoxy, $C_{1-6}$ alkylcarbonyl, phenyl, and hydroxy,
$R^{72}$ and $R^{73}$ may further each independently represent adamantyl or $C_{1-6}$ alkyl substituted with $Si(OCH_3)_2(CH_3)$,
alternatively, $R^{75}$ and $R^{76}$, or $R^{77}$ and $R^{78}$ may be combined together to form $-(CH_2)_{3-5}-$,
$R^{81}$, $R^{82}$, $R^{83}$, and $R^{84}$ are substituents selected from the group consisting of $C_{1-4}$ alkyl, $C_{1-4}$ alkylcarbonyl, and $C_{1-3}$ alkoxy, wherein the $C_{1-4}$ alkyl may be substituted with one $C_{1-3}$ alkoxy group,
$R^{71}$ and $R^{74}$ are each independently a $C_{1-3}$ alkyl group, and
$X_f^-$ is a counter anion.

[Fig. 1]

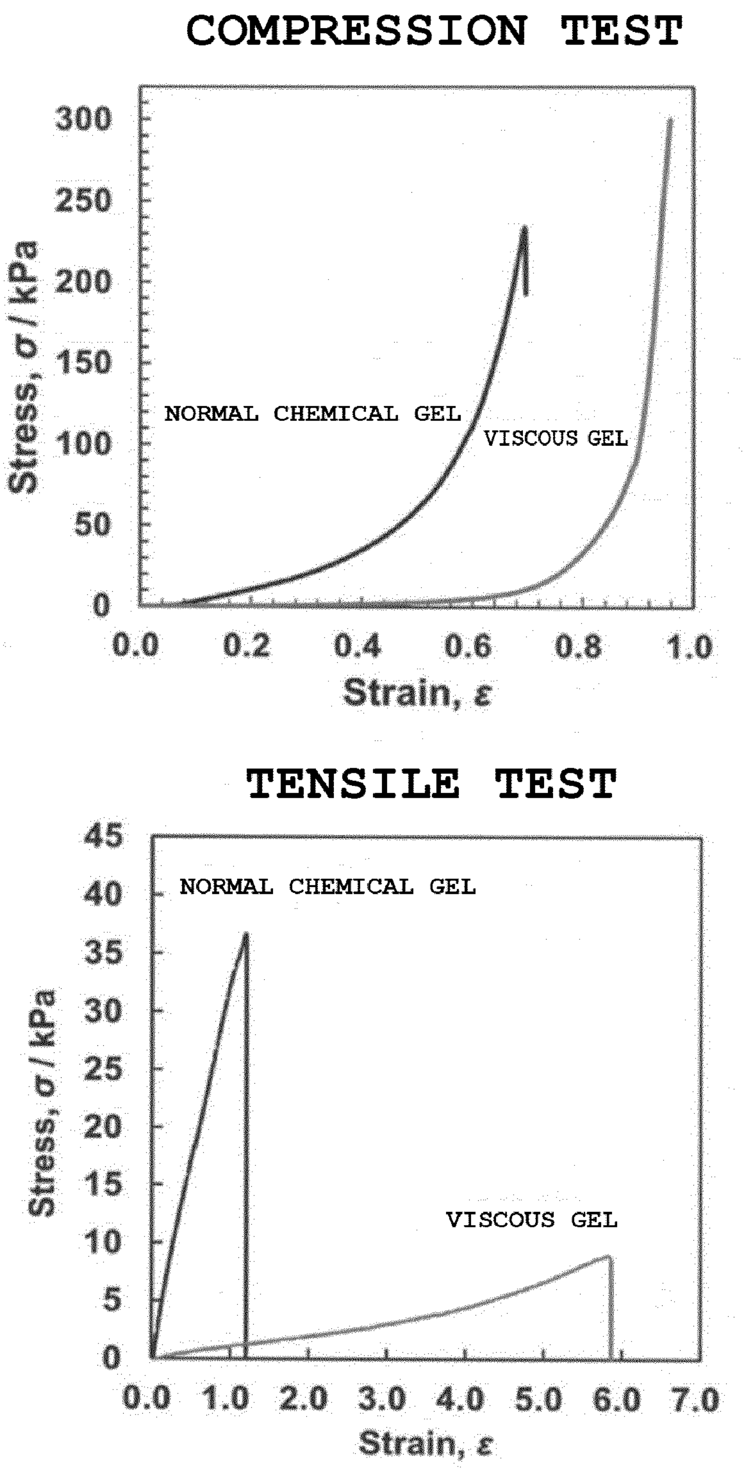
COMPRESSION TEST
Stress, σ / kPa
Strain, ε
NORMAL CHEMICAL GEL
VISCOUS GEL
0.0 0.2 0.4 0.6 0.8 1.0
0 50 100 150 200 250 300
TENSILE TEST
Stress, σ / kPa
Strain, ε
NORMAL CHEMICAL GEL
VISCOUS GEL
0.0 1.0 2.0 3.0 4.0 5.0 6.0 7.0
0 5 10 15 20 25 30 35 40 45

[Fig. 1-2]

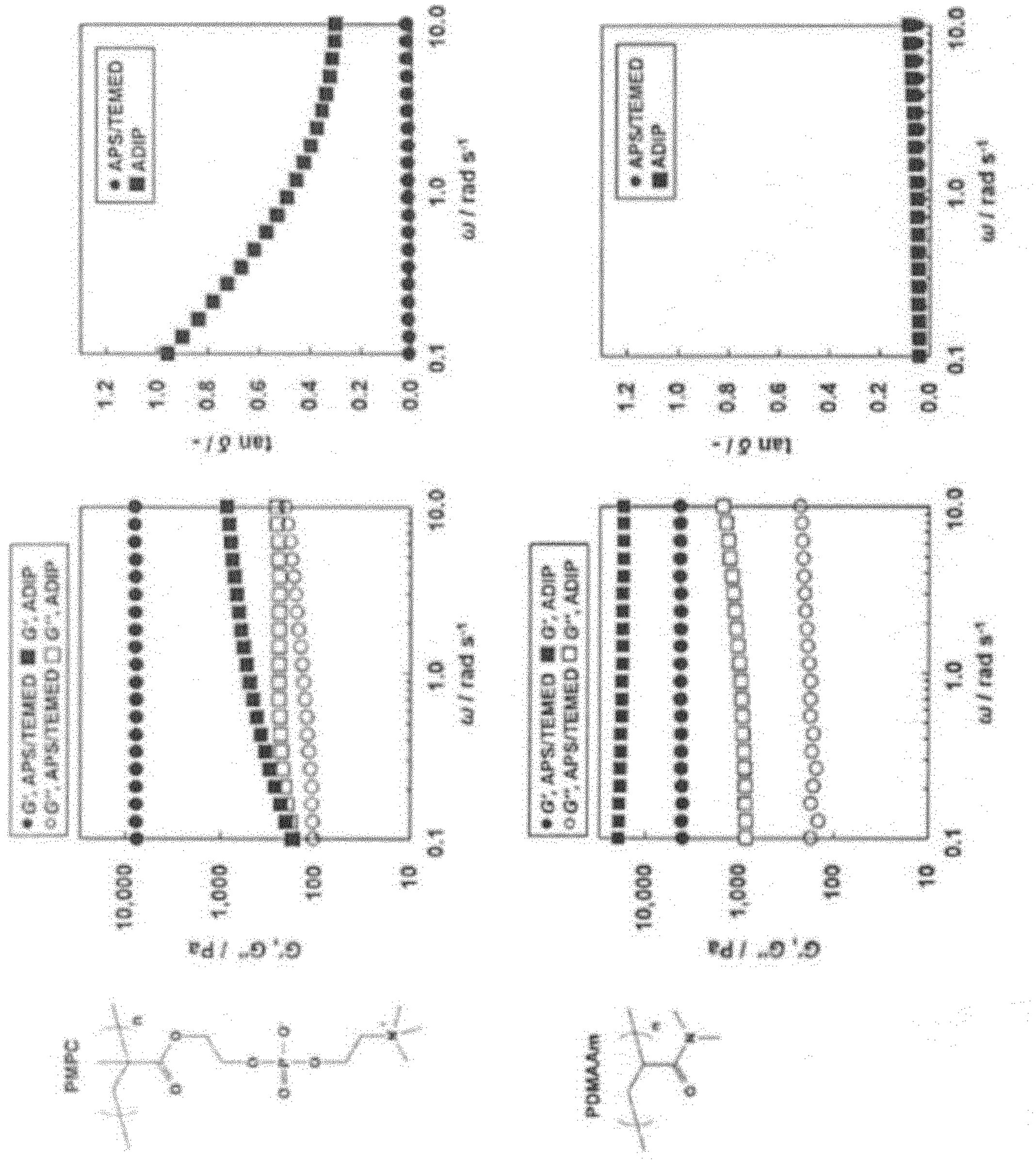
PMPC
PDMAAm
G', APS/TEMED
G', ADIP
G'', APS/TEMED
G'', ADIP
G', G'' / Pa
tan δ / -
APS/TEMED
ADIP
ω / rad s$^{-1}$

[Fig. 1-3]

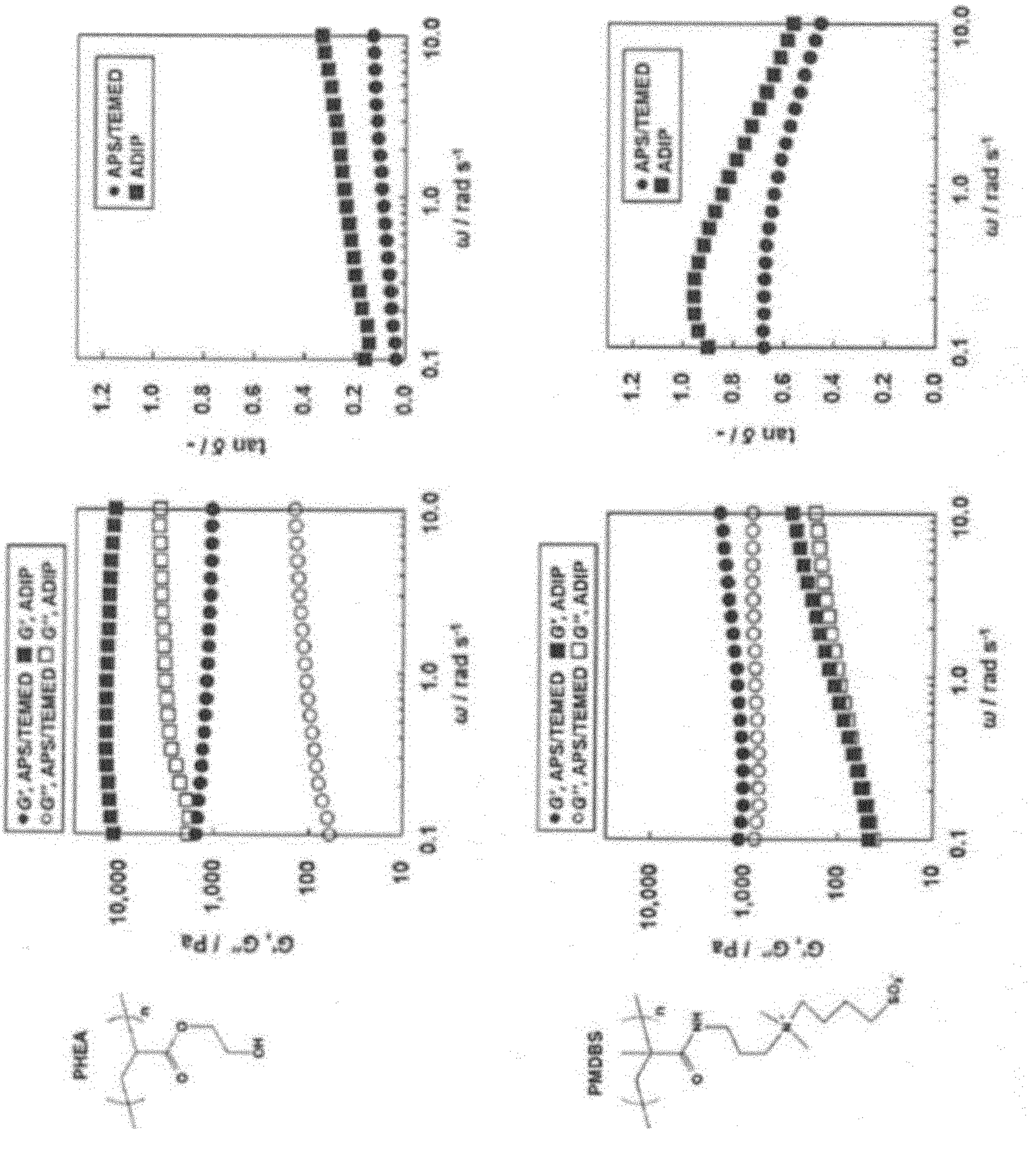
PHEA
PMDBS
G', G'' / Pa
tan δ / -
ω / rad s⁻¹
G', APS/TEMED
G'', APS/TEMED
G', ADIP
G'', ADIP
APS/TEMED
ADIP

[Fig. 1-4]

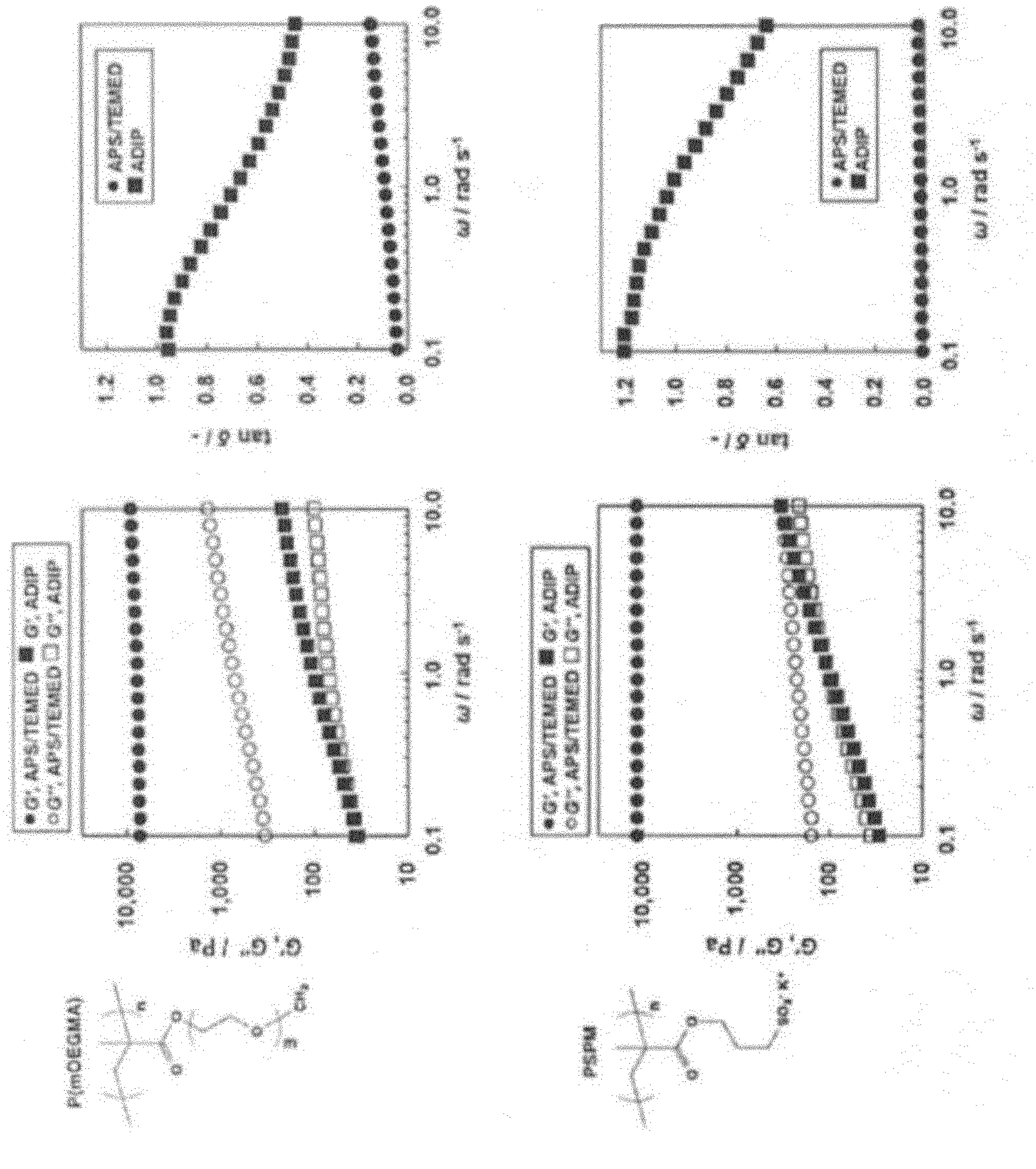
P(mOEGMA)
PSPM
G', G'' / Pa
tan δ / -
ω / rad s⁻¹
G', APS/TEMED
G'', APS/TEMED
G', ADIP
G'', ADIP
APS/TEMED
ADIP

[Fig. 1-5]

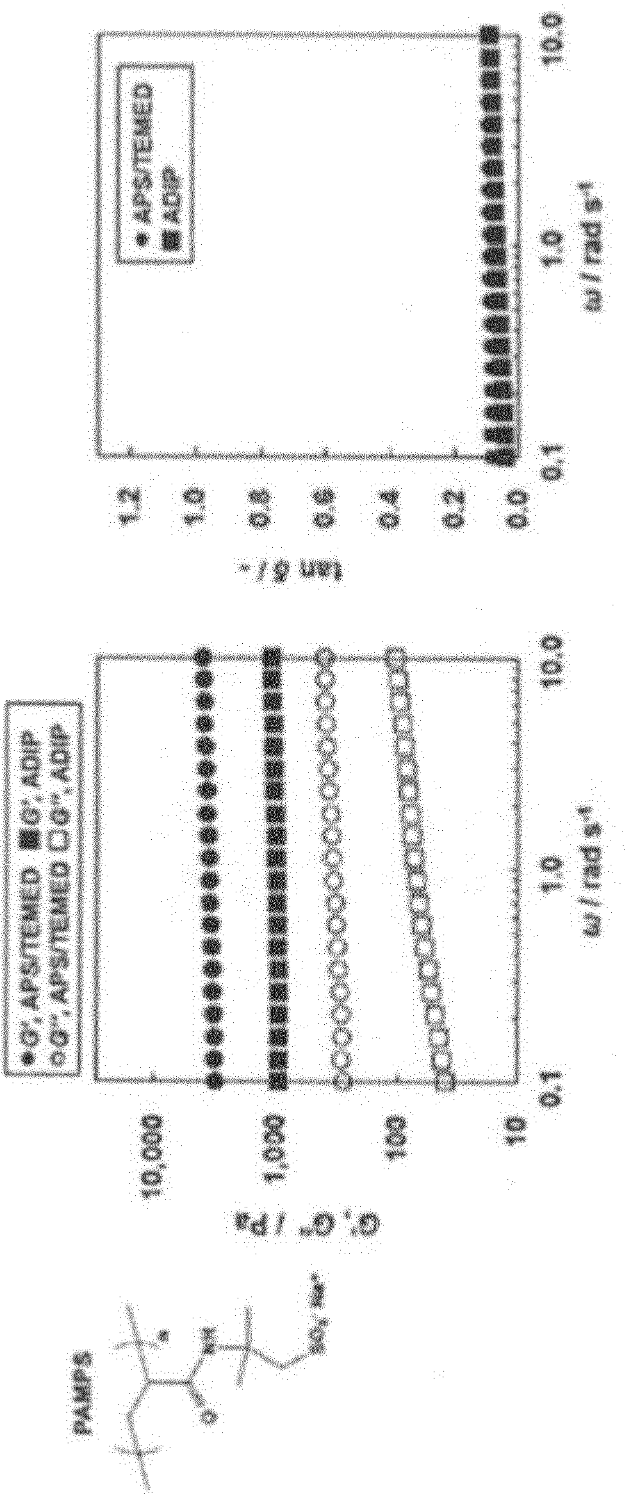
PAMPS
G', G'' / Pa
● G', APS/TEMED ■ G', ADIP
○ G'', APS/TEMED □ G'', ADIP
10,000
1,000
100
10
0.1
1.0
10.0
ω / rad s-1
tan δ / -
● APS/TEMED
■ ADIP
1.2
1.0
0.8
0.6
0.4
0.2
0.0

[Fig. 2]

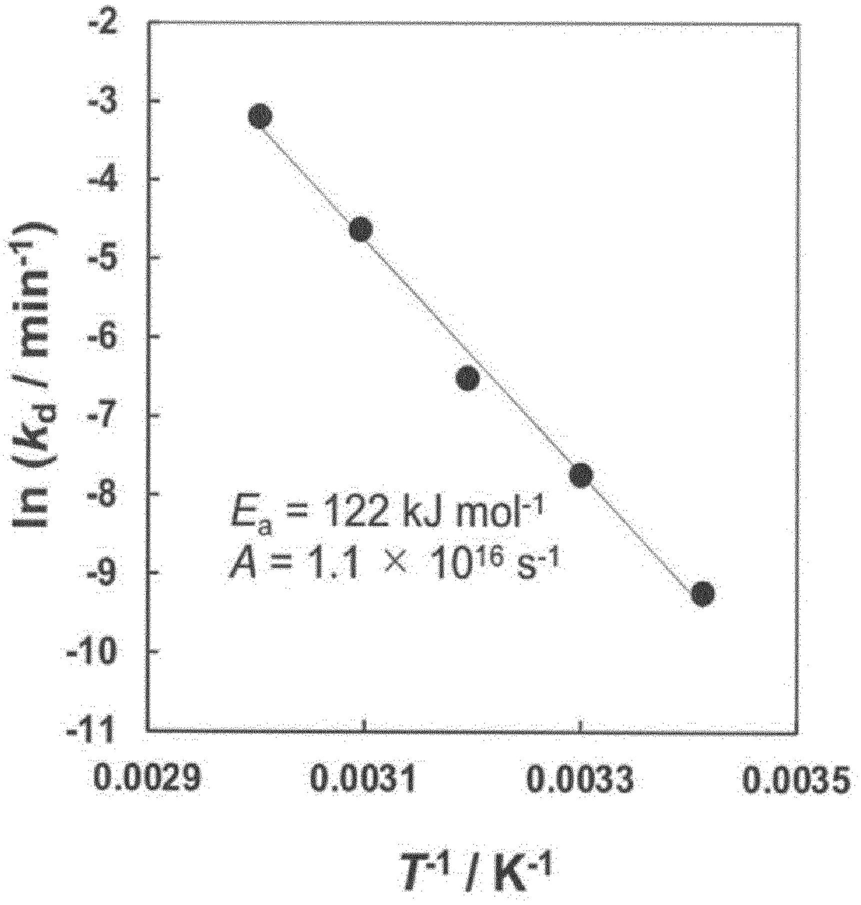
-2
-3
-4
-5
-6
-7
-8
-9
-10
-11
ln ($k_d$ / min$^{-1}$)
$E_a$ = 122 kJ mol$^{-1}$
$A$ = 1.1 × 10$^{16}$ s$^{-1}$
0.0029
0.0031
0.0033
0.0035
$T^{-1}$ / K$^{-1}$

[Fig. 3]

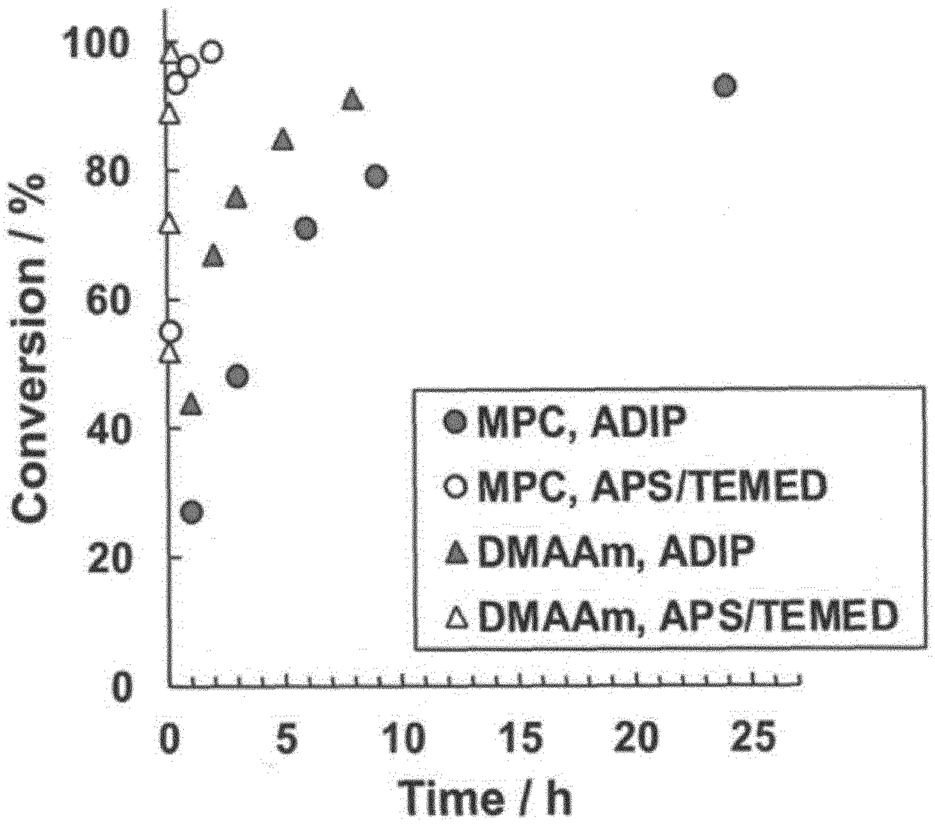
100
80
60
40
20
0
Conversion / %
0
5
10
15
20
25
Time / h
MPC, ADIP
MPC, APS/TEMED
DMAAm, ADIP
DMAAm, APS/TEMED

[Fig. 4]

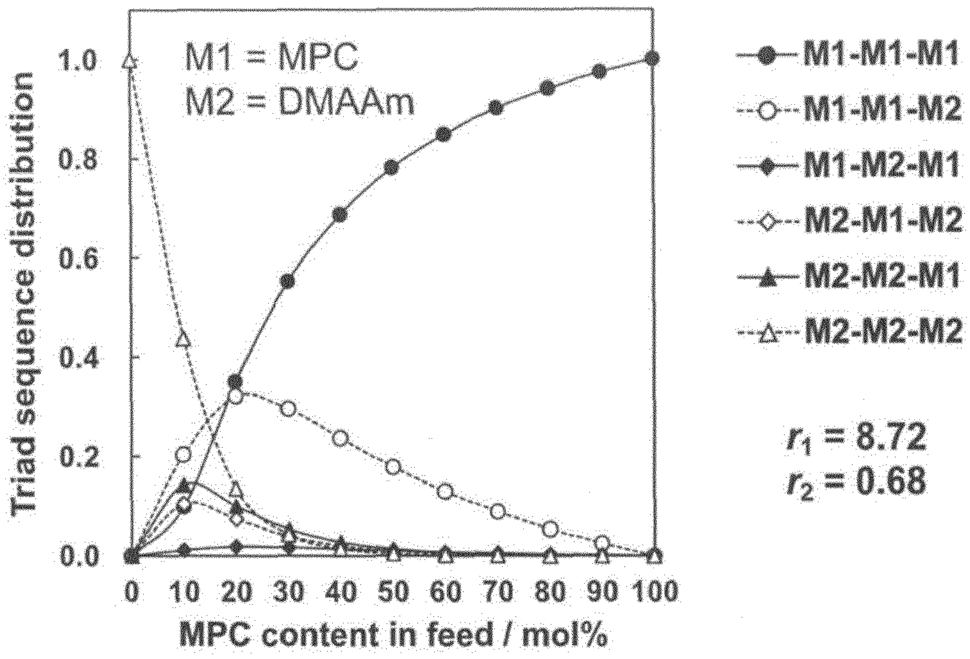
M1 = MPC
M2 = DMAAm
Triad sequence distribution
1.0
0.8
0.6
0.4
0.2
0.0
0 10 20 30 40 50 60 70 80 90 100
MPC content in feed / mol%
M1-M1-M1
M1-M1-M2
M1-M2-M1
M2-M1-M2
M2-M2-M1
M2-M2-M2
r1 = 8.72
r2 = 0.68

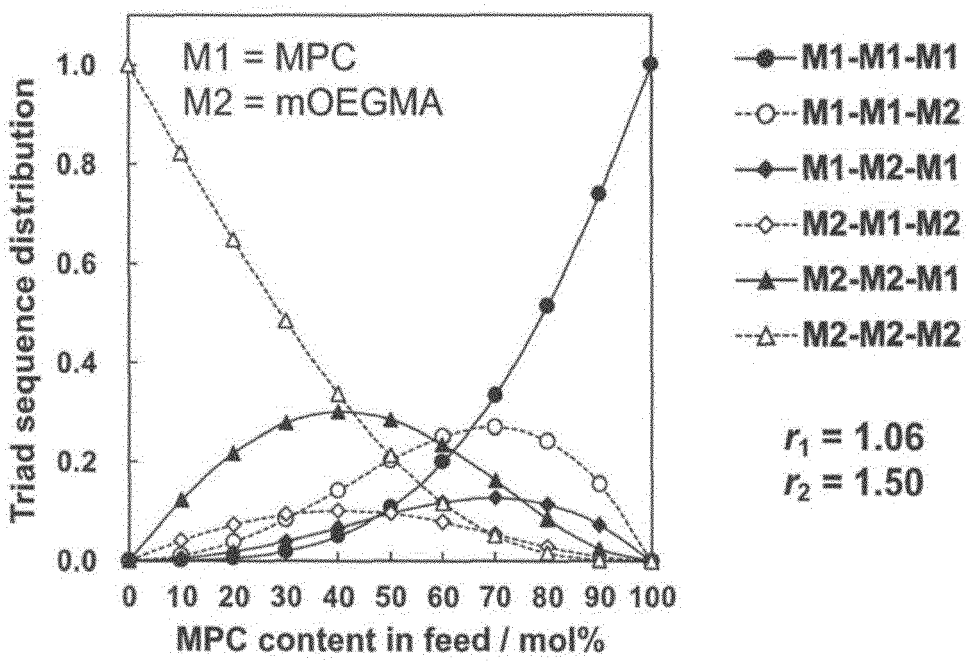
M1 = MPC
M2 = mOEGMA
Triad sequence distribution
1.0
0.8
0.6
0.4
0.2
0.0
0 10 20 30 40 50 60 70 80 90 100
MPC content in feed / mol%
M1-M1-M1
M1-M1-M2
M1-M2-M1
M2-M1-M2
M2-M2-M1
M2-M2-M2
r1 = 1.06
r2 = 1.50

[Fig. 4-2]

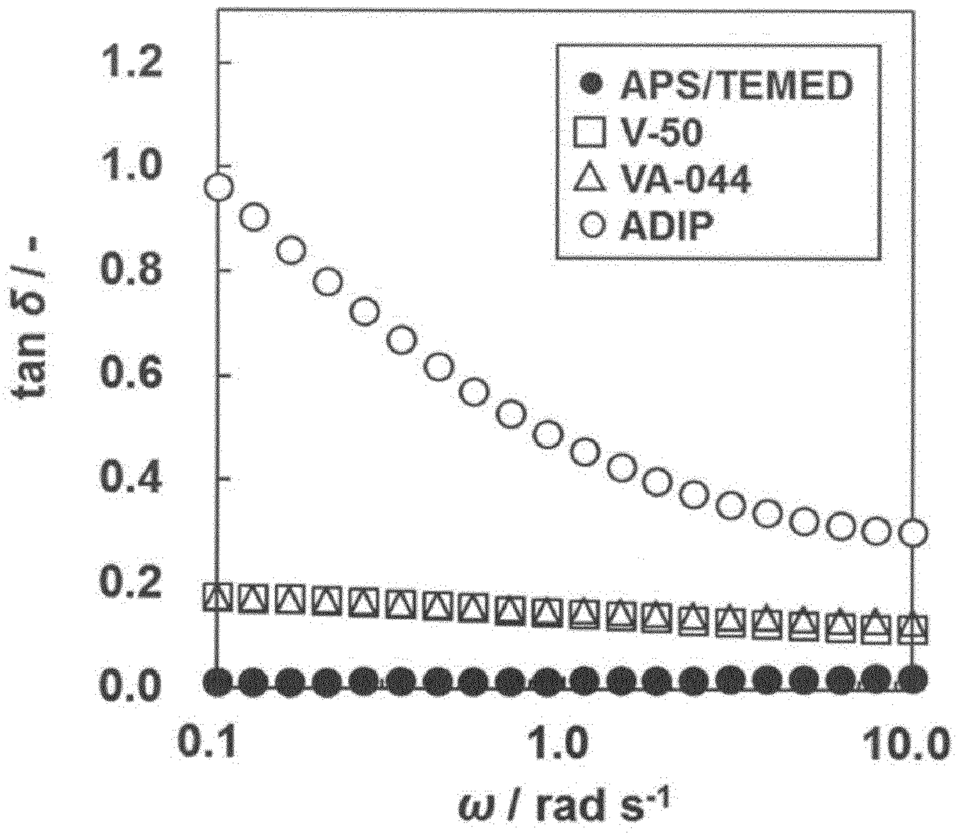
tan δ / -
1.2
1.0
0.8
0.6
0.4
0.2
0.0
0.1
1.0
10.0
ω / rad s-1
APS/TEMED
V-50
VA-044
ADIP

[Fig. 5]

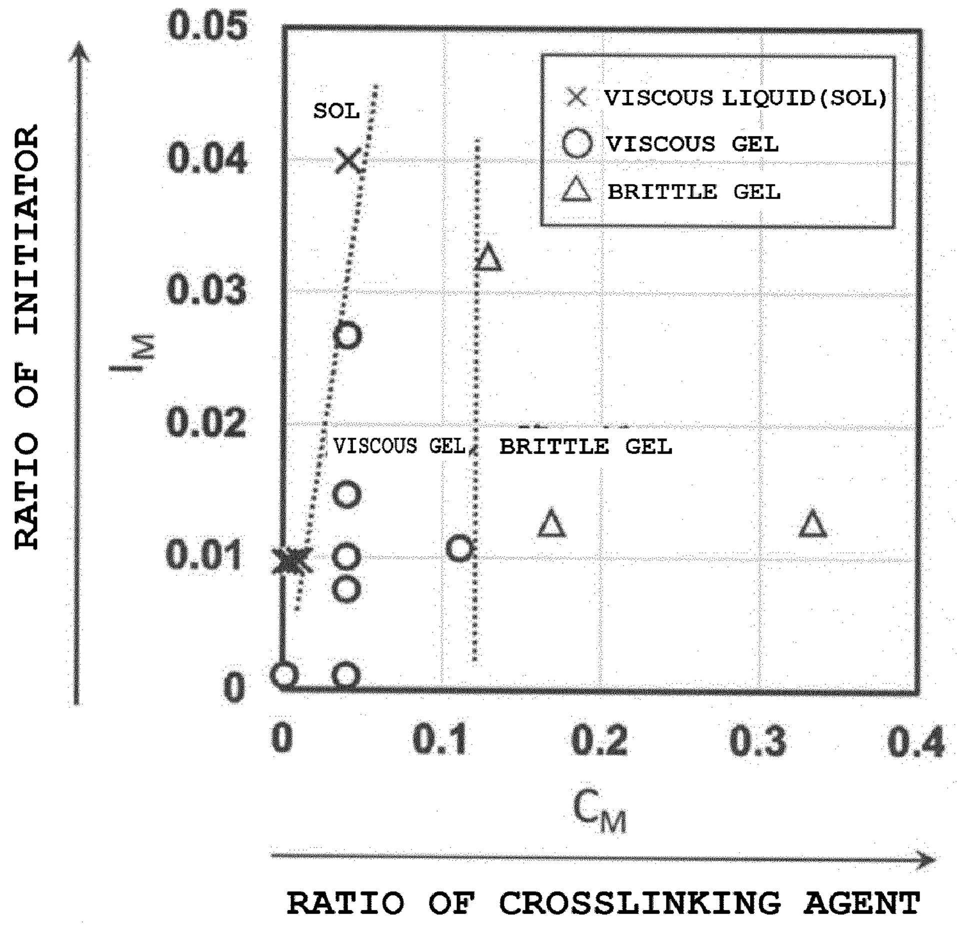
RATIO OF INITIATOR
$I_M$
0.05
0.04
0.03
0.02
0.01
0
0
0.1
0.2
0.3
0.4
$C_M$
RATIO OF CROSSLINKING AGENT
SOL
VISCOUS GEL
BRITTLE GEL
VISCOUS LIQUID(SOL)
VISCOUS GEL
BRITTLE GEL

[Fig. 5-2]

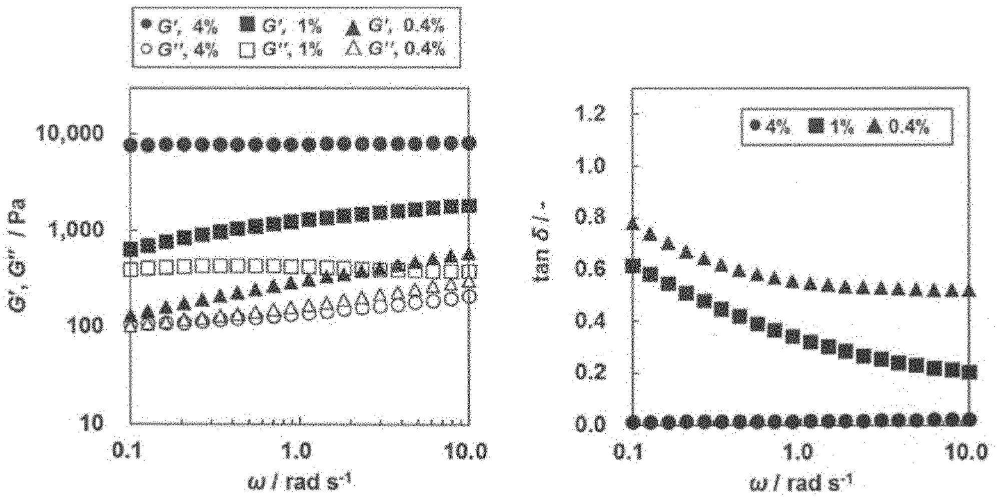
G', 4%
G', 1%
G', 0.4%
G'', 4%
G'', 1%
G'', 0.4%
10,000
1,000
100
10
G', G'' / Pa
0.1
1.0
10.0
ω / rad s-1
1.2
1.0
0.8
0.6
0.4
0.2
0.0
tan δ / -
4%
1%
0.4%
0.1
1.0
10.0
ω / rad s-1

[Fig. 6]

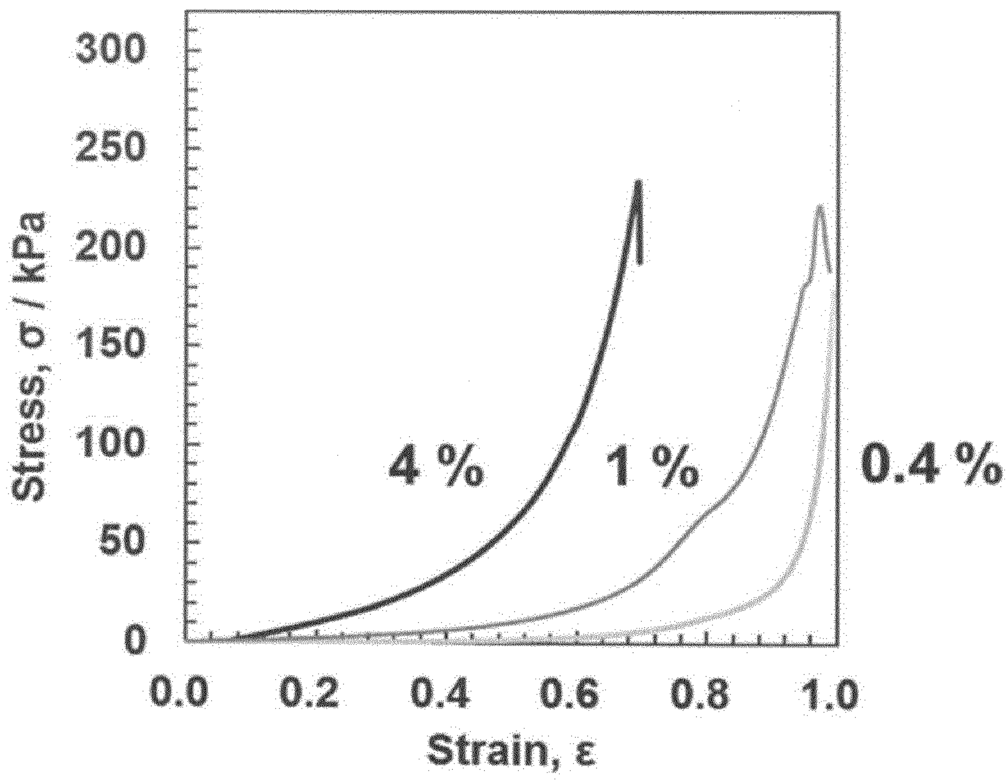
300
250
200
150
100
50
0
Stress, σ / kPa
0.0
0.2
0.4
0.6
0.8
1.0
Strain, ε
4 %
1 %
0.4 %

[Fig. 7]

$^1$H-NMR SPECTRUM (HORIZONTAL AXIS ppm): CHARGED MPC:MBAAm = 50:50 (mol%)
[WHEN CONVERTED TO RATIO OF NUMBER OF C=C BONDS, MPC:MBAAm = 33.3:66.7 (mol%)], BEFORE REACTION

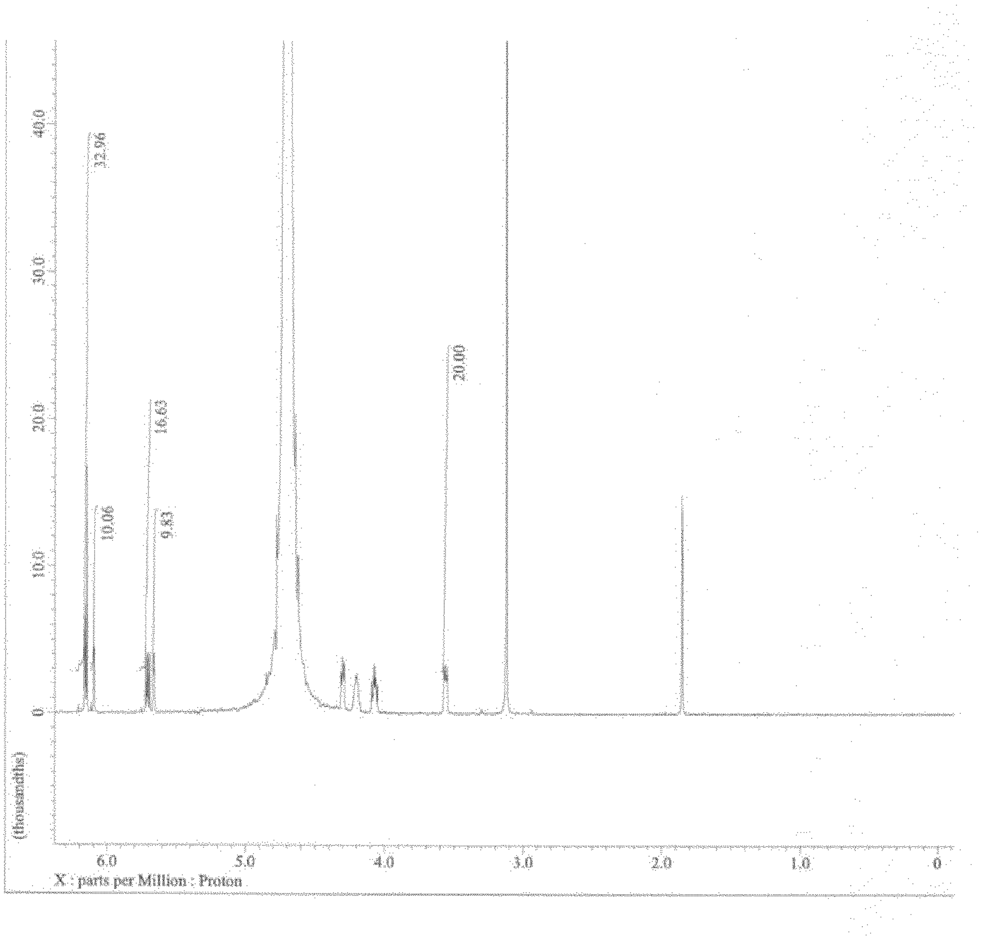

[Fig. 8]

$^1$H-NMR SPECTRUM (HORIZONTAL AXIS ppm): CHARGED MPC:MBAAm = 50:50 (mol%)

[WHEN CONVERTED TO RATIO OF NUMBER OF C=C BONDS, MPC:MBAAm = 33.3:66.7 (mol%)] 2 HOURS AFTER REACTION

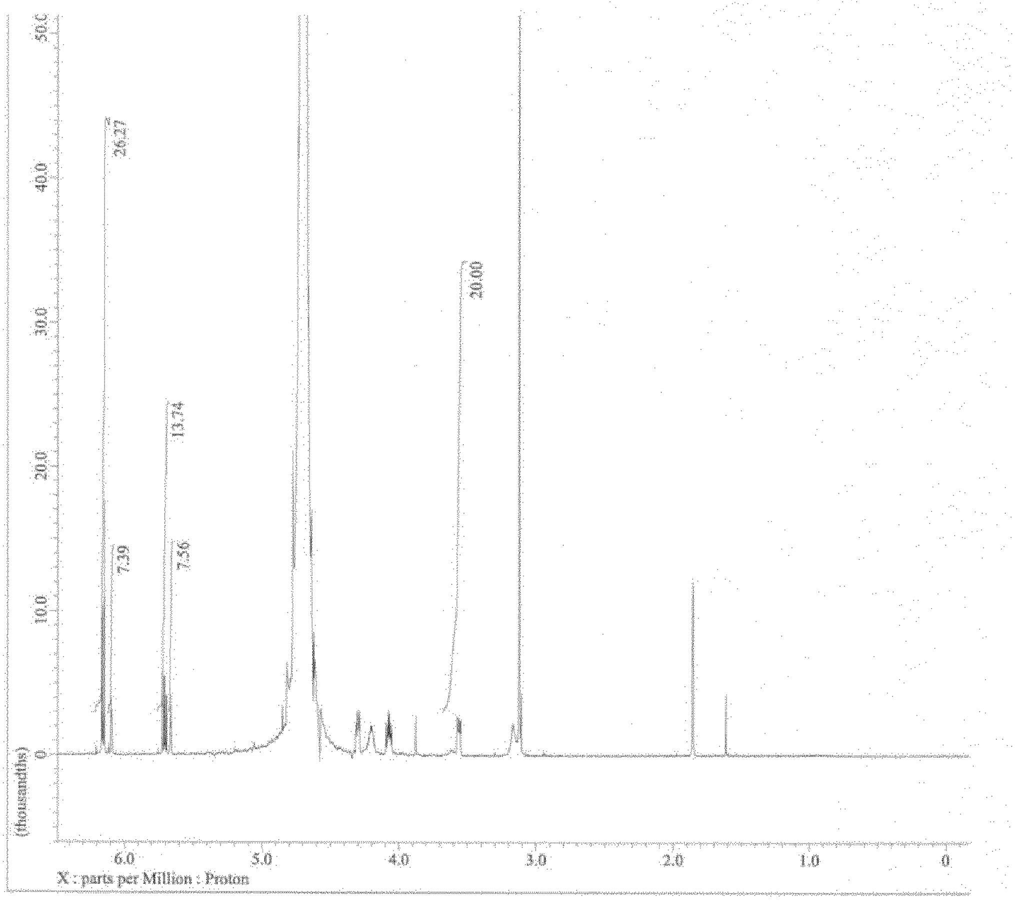

[Fig. 9]

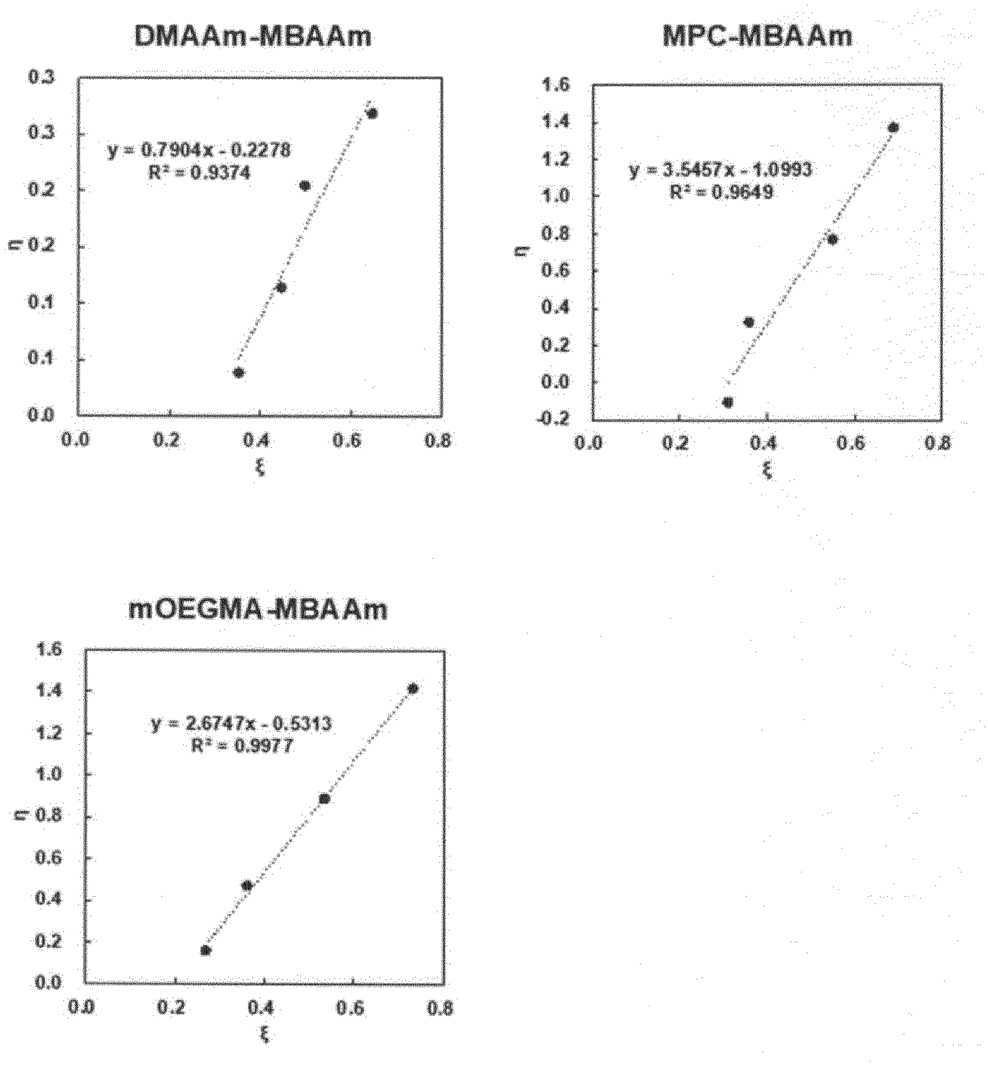
DMAAm-MBAAm
y = 0.7904x - 0.2278
R² = 0.9374
η
ξ
0.3
0.3
0.2
0.2
0.1
0.1
0.0
0.0
0.2
0.4
0.6
0.8
MPC-MBAAm
y = 3.5457x - 1.0993
R² = 0.9649
η
ξ
1.6
1.4
1.2
1.0
0.8
0.6
0.4
0.2
0.0
-0.2
0.0
0.2
0.4
0.6
0.8
mOEGMA-MBAAm
y = 2.6747x - 0.5313
R² = 0.9977
η
ξ
1.6
1.4
1.2
1.0
0.8
0.6
0.4
0.2
0.0
0.0
0.2
0.4
0.6
0.8

[Fig. 10]

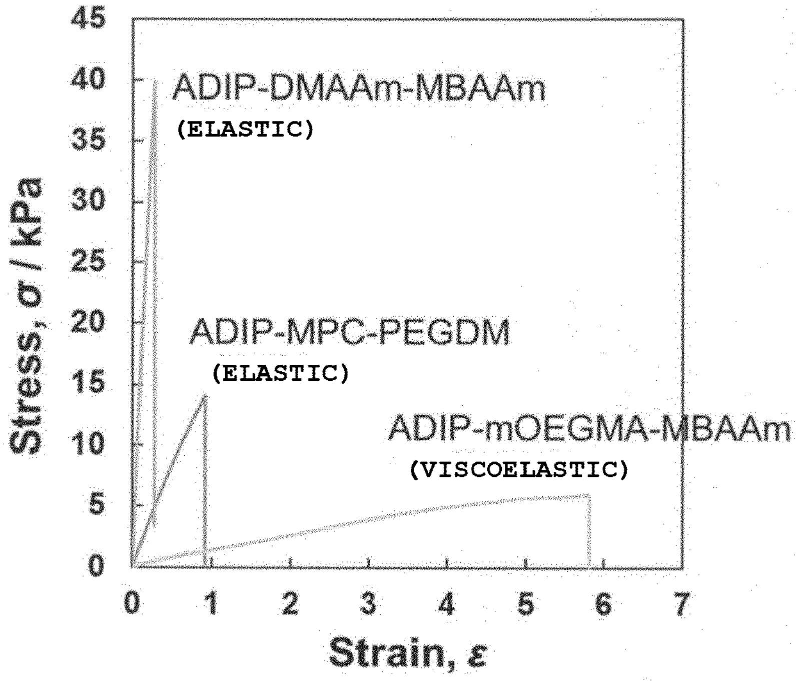
45
40
35
30
25
20
15
10
5
0
Stress, σ / kPa
0
1
2
3
4
5
6
7
Strain, ε
ADIP-DMAAm-MBAAm
(ELASTIC)
ADIP-MPC-PEGDM
(ELASTIC)
ADIP-mOEGMA-MBAAm
(VISCOELASTIC)

[Fig. 11]

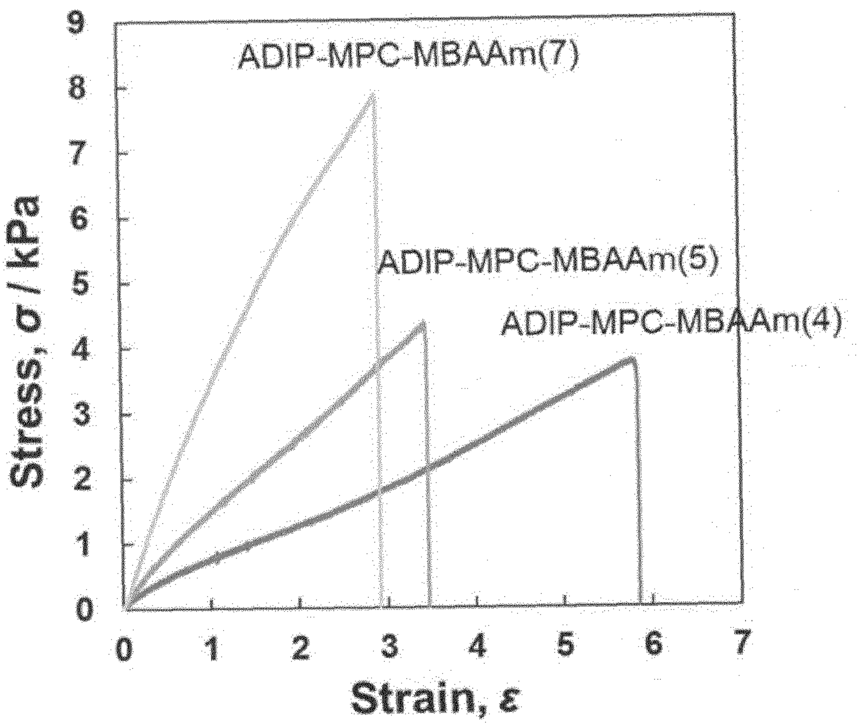
ADIP-MPC-MBAAm(7)
ADIP-MPC-MBAAm(5)
ADIP-MPC-MBAAm(4)
Stress, σ / kPa
Strain, ε
0
1
2
3
4
5
6
7
8
9
0
1
2
3
4
5
6
7

[Fig. 12]

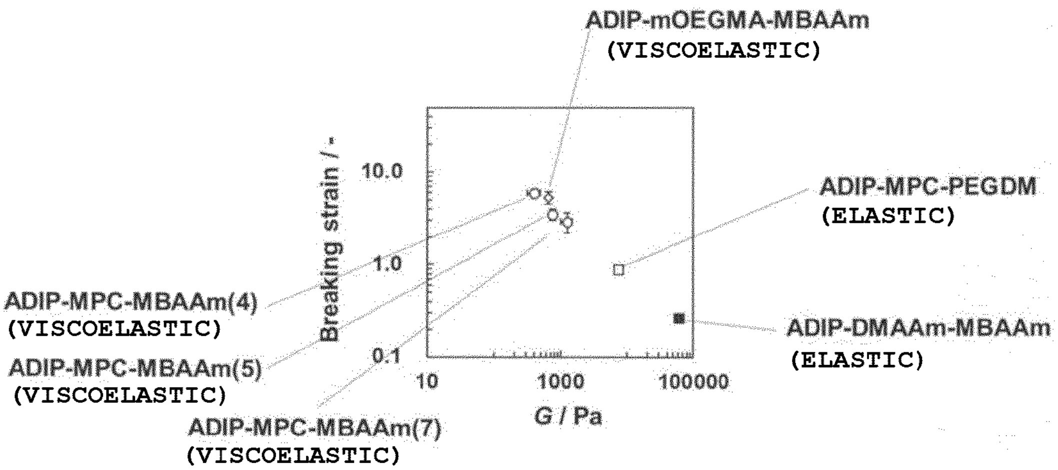
ADIP-mOEGMA-MBAAm
(VISCOELASTIC)
ADIP-MPC-PEGDM
(ELASTIC)
ADIP-DMAAm-MBAAm
(ELASTIC)
ADIP-MPC-MBAAm(4)
(VISCOELASTIC)
ADIP-MPC-MBAAm(5)
(VISCOELASTIC)
ADIP-MPC-MBAAm(7)
(VISCOELASTIC)
Breaking strain / -
10.0
1.0
0.1
10
1000
100000
G / Pa

[Fig. 13]

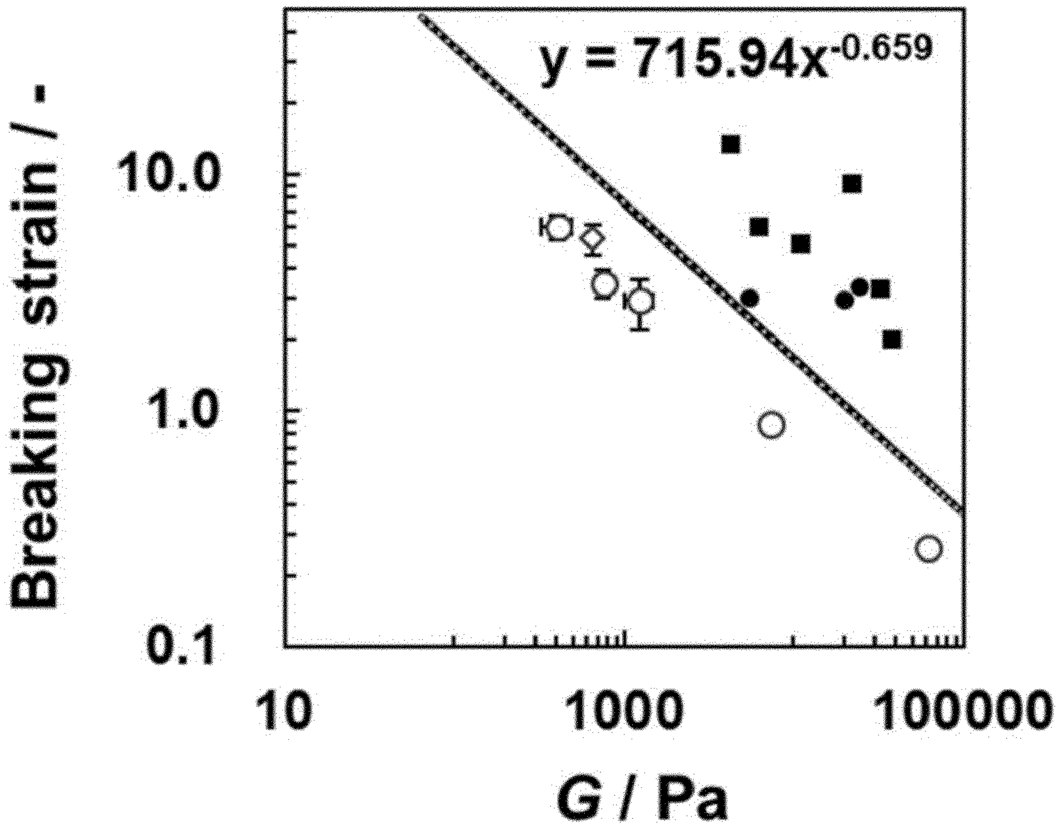

[Fig. 14]

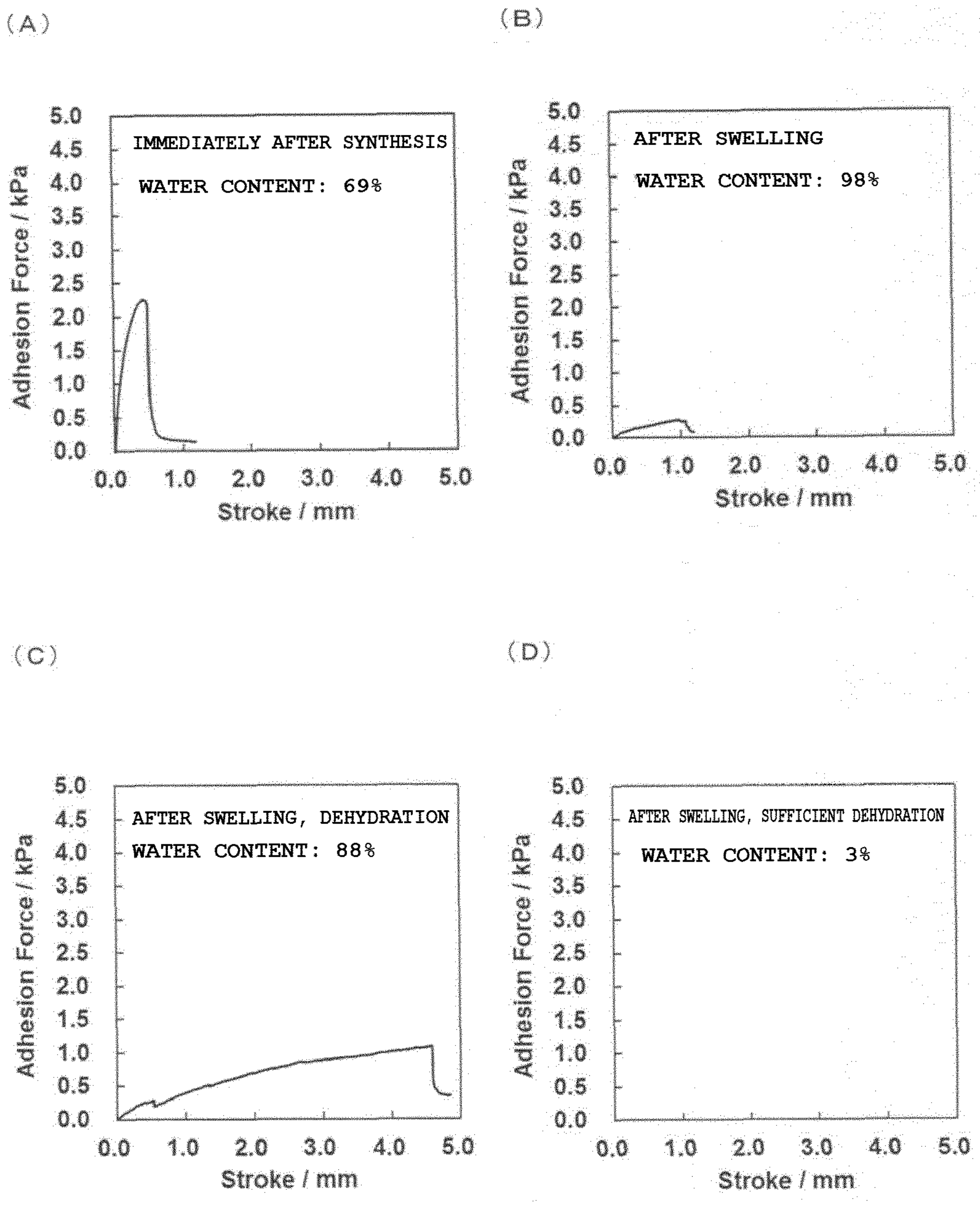

(A)
IMMEDIATELY AFTER SYNTHESIS
WATER CONTENT: 69%
Adhesion Force / kPa
Stroke / mm
0.0
0.5
1.0
1.5
2.0
2.5
3.0
3.5
4.0
4.5
5.0
(B)
AFTER SWELLING
WATER CONTENT: 98%
Adhesion Force / kPa
Stroke / mm
(C)
AFTER SWELLING, DEHYDRATION
WATER CONTENT: 88%
Adhesion Force / kPa
Stroke / mm
(D)
AFTER SWELLING, SUFFICIENT DEHYDRATION
WATER CONTENT: 3%
Adhesion Force / kPa
Stroke / mm

[Fig. 15]

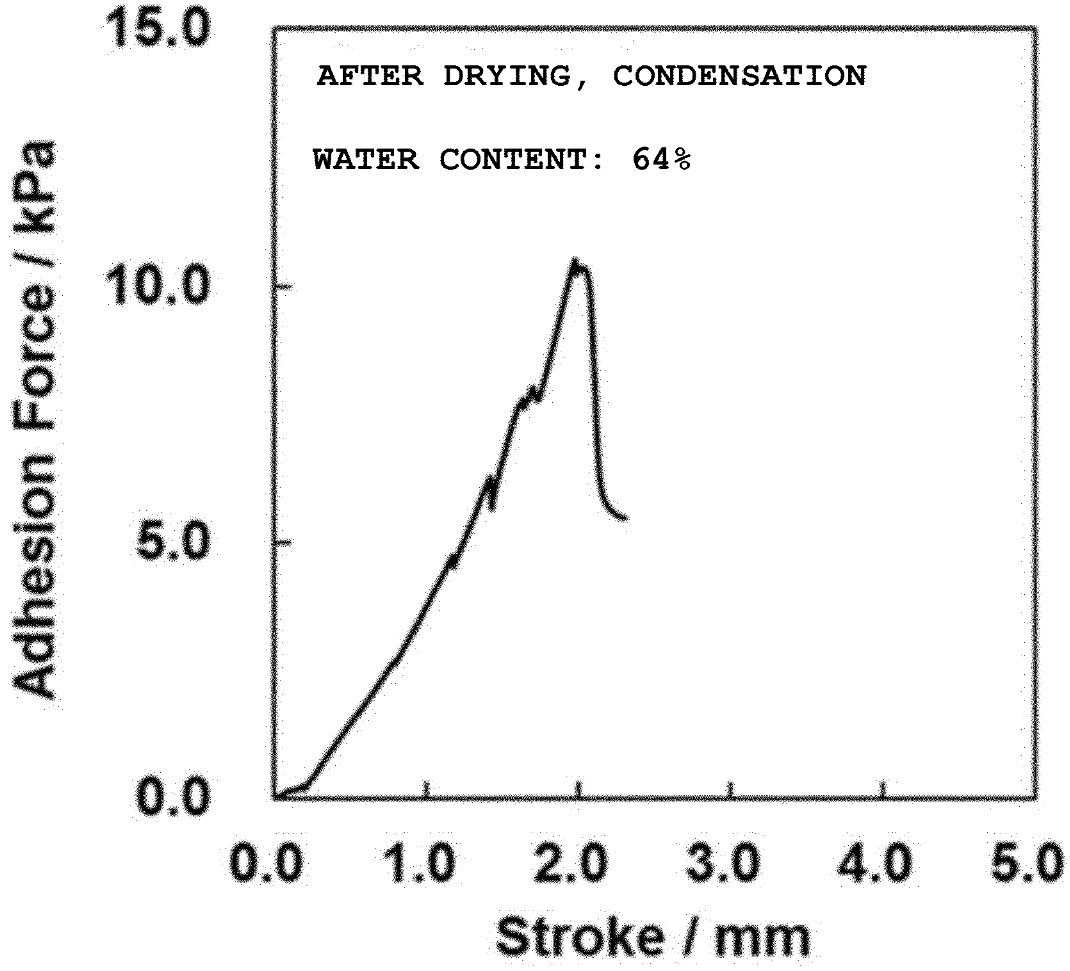
AFTER DRYING, CONDENSATION
WATER CONTENT: 64%
Adhesion Force / kPa
15.0
10.0
5.0
0.0
0.0
1.0
2.0
3.0
4.0
5.0
Stroke / mm

## INTERNATIONAL SEARCH REPORT

International application No.
**PCT/JP2022/044595**

**A. CLASSIFICATION OF SUBJECT MATTER**

***C08F 220/06***(2006.01)i; ***C08F 2/00***(2006.01)i; ***C08F 4/04***(2006.01)i; ***C08F 220/20***(2006.01)i; ***C08F 220/38***(2006.01)i; ***C08F 220/58***(2006.01)i; ***C08F 230/02***(2006.01)i; ***C08F 236/20***(2006.01)i
FI: C08F220/06; C08F2/00 D; C08F4/04; C08F220/20; C08F220/38; C08F220/58; C08F230/02; C08F236/20

According to International Patent Classification (IPC) or to both national classification and IPC

**B. FIELDS SEARCHED**

Minimum documentation searched (classification system followed by classification symbols)

C08F220/06; C08F2/00; C08F4/04; C08F220/20; C08F220/38; C08F220/58; C08F230/02; C08F236/20

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| A | WO 2017/043484 A1 (KIRIN KK) 16 March 2017 (2017-03-16) claims, examples | 1-18 |
| A | JP 2019-065005 A (KIRIN KK) 25 April 2019 (2019-04-25) claims, examples | 1-18 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **23 January 2023** | **07 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/044595**

| Patent document cited in search report | Publication date (day/month/year) | Patent family member(s) | Publication date (day/month/year) |
|---|---|---|---|
| WO 2017/043484 A1 | 16 March 2017 | US 2019/0137503 A1<br>claims, examples<br>EP 3348648 A1<br>KR 10-2018-0040714 A<br>CN 108350479 A | |
| JP 2019-065005 A | 25 April 2019 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021196875 A
- JP 2021196860 A
- JP 2018199753 A
- JP 2017171825 A
- JP 2017051113 A


### Non-patent literature cited in the description


- **FENG XD ; GUO XQ ; QIU KY.** *Makromol. Chem.,* 1988, vol. 189, 77-83
- **NORIOKA et al.** *NPG Asia Materials,* 2021, vol. 13, 34